# EUROPEAN PATENT SPECIFICATION

(11) **EP 3 577 941 B1**
(45) Date of publication and mention of the grant of the patent: **18.05.2022**
(21) Application number: 18748430.8
(22) Date of filing: 19.01.2018
(51) Int. Cl.: H04W 16/14, H04W 60/00

(54) **RELIABLE DATA SERVICE PROTOCOL FOR CIOT DEVICES**
ZUVERLÄSSIGES DATENDIENSTPROTOKOLL FÜR CIOT-VORRICHTUNGEN
PROTOCOLE DE SERVICE DE DONNÉES FIABLE POUR DISPOSITIFS CIOT

(30) Priority: 06.02.2017 US 201762455480 P; 27.03.2017 US 201762477340 P
(43) Date of publication of application: 11.12.2019
(73) Proprietor: Apple Inc., Cupertino, CA 95014 (US)
(72) Inventor: GUPTA, Vivek, San Jose, California 95138 (US); ZAUS, Robert, 80686 München (DE); JAIN, Puneet, Hillsboro, Oregon 97124 (US)
(74) Representative: Wardle, Callum Tarn
(86) International application number: PCT/US2018/014488
(87) International publication number: WO 2018/144249

(56) References cited:
- WO-A1-2016/148773
- WO-A1-2016/200357
- WO-A1-2016/200357
- WO-A1-2017/017931
- US-A1- 2017 006 528
- "3rd Generation Partnership Project; Technical Specification Group Services and System Aspects; Study on extended architecture support for Cellular Internet of Things (CIoT) (Release 14)", 3GPP STANDARD ; TECHNICAL REPORT ; 3GPP TR 23.730, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V14.0.0, 16 December 2016 (2016-12-16), pages 1-83, XP051295447, [retrieved on 2016-12-16]
- INTEL: "CI-170701, Reliable Data Service for NIDD between UE and SCEF", 3GPP TSG CT WG1 Meeting #102, 6 February 2017 (2017-02-06), XP051219426, Dubrovnik , Croatia

## Description

### PRIORITY CLAIM

This application claims the benefit of priority to United States Provisional Patent Application Serial No. 62/455,480, filed February 6, 2017, and entitled "PROTOCOL FOR RELIABLE DATA SERVICE FOR CIOT," and United States Provisional Patent Application Serial No. 62/477,340, filed March 27, 2017, and entitled "PROTOCOL FOR RELIABLE DATA SERVICE FOR CELLULAR INTERNET OF THINGS (CIOT),".

### TECHNICAL FIELD

Aspects pertain to wireless communications. Some aspects relate to wireless networks including 3GPP (Third Generation Partnership Project) networks, 3GPP LTE (Long Term Evolution) networks, 3GPP LTE-A (LTE Advanced) networks, and fifth-generation (5G) networks including new radio (NR) networks. Other aspects are directed to a Reliable Data Service (RDS) protocol for Cellular Internet-of-Things (CIoT) devices.

### BACKGROUND

Mobile communications have evolved significantly from early voice systems to today's highly sophisticated integrated communication platform. With the increase in different types of devices communicating with various network devices, usage of 3GPP LTE systems has increased. The penetration of mobile devices (user equipment or UEs) in modern society has continued to drive demand for a wide variety of networked devices in a number of disparate environments.

LTE and LTE-Advanced are standards for wireless communications of high-speed data for user equipment (UE) such as mobile telephones. In LTE-Advanced and various wireless systems, carrier aggregation is a technology according to which multiple carrier signals operating on different frequencies may be used to carry communications for a single UE, thus increasing the bandwidth available to a single device. In some aspects, carrier aggregation may be used where one or more component carriers operate on unlicensed frequencies.

There are emerging interests in the operation of LTE systems in the unlicensed spectrum. As a result, an important enhancement for LTE in 3GPP Release 13 has been to enable its operation in the unlicensed spectrum via Licensed-Assisted Access (LAA), which expands the system bandwidth by utilizing the flexible carrier aggregation (CA) framework introduced by the LTE-Advanced system. Rel-13 LAA system focuses on the design of downlink operation on unlicensed spectrum via CA, while Rel-14 enhanced LAA (eLAA) system focuses on the design of uplink operation on unlicensed spectrum via CA.

The use of networked UEs using 3GPP LTE systems has increased in areas of home and work life. Fifth generation (5G) wireless systems are forthcoming, and are expected to enable even greater speed, connectivity, and usability. Next generation 5G networks are expected to increase throughput, coverage, and robustness. As current cellular network frequency is saturated, high frequencies, such as millimeter wave (mmWave) frequency, can be beneficial due to their high bandwidth.

Potential LTE operation in the unlicensed spectrum includes (and is not limited to) the LTE operation in the unlicensed spectrum via dual connectivity (DC), or DC-based LAA, and the standalone LTE system in the unlicensed spectrum, according to which LTE-based technology solely operates in unlicensed spectrum without requiring an "anchor" in the licensed spectrum, called MulteFire. MulteFire combines the performance benefits of LTE technology with the simplicity of Wi-Fi-like deployments. Further enhanced operation of LTE systems in the licensed as well as unlicensed spectrum is expected in future releases and 5G systems.

Machine-to-Machine (M2M) communications represents a significant growth opportunity for 3GPP ecosystems. With proliferation of the wireless networks, there is an accelerated push towards connected, smart physical objects, such as wireless sensors, smart meters, dedicated microprocessors, etc., that span different ecosystems with diverse business models. In this regard, various data delivery mechanisms can be deployed within a dense communication environment.

3rd Generation Partnership Project; Technical Specification Group Services and System Aspects; Study on extended architecture support for Cellular Internet of Things (CIoT) (Release 14)" 3GPP STANDARD ; TECHNICAL REPORT ; 3GPP TR 23.730, 3RD GENERATION PARTNERSHIP PROJECT (3GPP), describes various architecture enhancements relating to reliable communication service between a CIoT UE and SCEF.

### SUMMARY

The invention is defined by the appended claims, and relates to an apparatus of a Cellular-Internet-of-Things, CIoT, capable user equipment, UE, (claim1) and a non-transitory computer-readable storage medium for UE and for CIoT Service Capability Exposure Function, SCEF, (claim 12 and claim 14 respectively).

### BRIEF DESCRIPTION OF THE FIGURES

In the figures, which are not necessarily drawn to scale, like numerals may describe similar components in different views. Like numerals having different letter suffixes may represent different instances of similar components. The figures illustrate generally, by way of example, but not by way of limitation, various aspects discussed in the present document.
FIG. 1A illustrates an architecture of a network in accordance with some aspects.
FIG. 1B is a simplified diagram of an overall next generation (NG) system architecture in accordance with some aspects.
FIG. 1C illustrates a functional split between NG - RAN and the 5G Core (5GC) in accordance with some aspects.
FIG. 1D and FIG. 1E illustrate a non-roaming 5G system architecture in accordance with some aspects.
FIG. 1F illustrates an example CIoT network architecture in accordance with some aspects.
FIG. 2 illustrates example components of a device 200 in accordance with some aspects.
FIG. 3 illustrates example interfaces of baseband circuitry in accordance with some aspects.
FIG. 4 is an illustration of a control plane protocol stack in accordance with some aspects.
FIG. 5 is an illustration of a user plane protocol stack in accordance with some aspects.
FIG. 6 is a block diagram illustrating components, according to some example aspects, able to read instructions from a machine-readable or computer-readable medium (e.g., a non-transitory machine-readable storage medium) and perform any one or more of the methodologies discussed herein.
FIG. 7 illustrates protocol layering for a reliable data transfer between UE and a Service Capability Exposure Function (SCEF), in accordance with some aspects.
FIG. 8 illustrates an example reliable data service (RDS) frame format, in accordance with some aspects.
FIG. 9 illustrates a format of an address field of an RDS frame, in accordance with some aspects.
FIG. 10 illustrates a Command/Response (C/R) field bit usage, in accordance with some aspects.
FIG. 11 illustrates a format of a control field of an RDS frame, in accordance with some aspects.
FIG. 12 illustrates a table with example RDS commands and responses, in accordance with some aspects.
FIG. 13 illustrates an example unacknowledged information transfer procedure, in accordance with some aspects.
FIG. 14 illustrates establishment of an acknowledged information transfer procedure, in accordance with some aspects.
FIG. 15 illustrates an example acknowledged information transfer procedure, in accordance with some aspects.
FIG. 16 illustrates an example termination of acknowledged information transfer procedure, in accordance with some aspects.
FIG. 17 illustrates example RDS protocol procedures, in accordance with some aspects.
FIG. 18 illustrates generally a flowchart of an example method of operating a UE supporting RDS functionalities, in accordance with some aspects.
FIG. 19 illustrates a block diagram of a communication device such as an evolved Node-B (eNB), a new generation Node-B (gNB), an access point (AP), a wireless station (STA), a mobile station (MS), or a user equipment (UE), in accordance with some aspects.

### DETAILED DESCRIPTION

The following description and the drawings sufficiently illustrate aspects to enable those skilled in the art to practice them. Other aspects may incorporate structural, logical, electrical, process, and other changes. Portions and features of some aspects may be included in, or substituted for, those of other aspects. Aspects set forth in the claims encompass all available equivalents of those claims.

Any of the radio links described herein may operate according to any one or more of the following exemplary radio communication technologies and/or standards including but not limited to: a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology, for example Universal Mobile Telecommunications System (UMTS), Freedom of Multimedia Access (FOMA), 3GPP Long Term Evolution (LTE), 3GPP Long Term Evolution Advanced (LTE Advanced), Code division multiple access 2000 (CDMA2000), Cellular Digital Packet Data (CDPD), Mobitex, Third Generation (3G), Circuit Switched Data (CSD), High-Speed Circuit-Switched Data (HSCSD), Universal Mobile Telecommunications System (Third Generation) (UMTS (3G)), Wideband Code Division Multiple Access (Universal Mobile Telecommunications System) (W-CDMA (UMTS)), High Speed Packet Access (HSPA), High-Speed Downlink Packet Access (HSDPA), High-Speed Uplink Packet Access (HSUPA), High Speed Packet Access Plus (HSPA+), Universal Mobile Telecommunications System-Time-Division Duplex (UMTS-TDD), Time Division-Code Division Multiple Access (TD-CDMA), Time Division-Synchronous Code Division Multiple Access (TD-CDMA), 3rd Generation Partnership Project Release 8 (Pre-4th Generation) (3GPP Rel. 8 (Pre-4G)), 3GPP Rel. 9 (3rd Generation Partnership Project Release 9), 3GPP Rel. 10 (3rd Generation Partnership Project Release 10), 3GPP Rel. 11 (3rd Generation Partnership Project Release 11), 3GPP Rel. 12 (3rd Generation Partnership Project Release 12), 3GPP Rel. 13 (3rd Generation Partnership Project Release 13), 3GPP Rel. 14 (3rd Generation Partnership Project Release 14), 3GPP Rel. 15 (3rd Generation Partnership Project Release 15), 3GPP Rel. 16 (3rd Generation Partnership Project Release 16), 3GPP Rel. 17 (3rd Generation Partnership Project Release 17), 3GPP Rel. 18 (3rd Generation Partnership Project Release 18), 3GPP 5G, 3GPP LTE Extra, LTE-Advanced Pro, LTE Licensed-Assisted Access (LAA), MulteFire, UMTS Terrestrial Radio Access (UTRA), Evolved UMTS Terrestrial Radio Access (E-UTRA), Long Term Evolution Advanced (4th Generation) (LTE Advanced (4G)), cdmaOne (2G), Code division multiple access 2000 (Third generation) (CDMA2000 (3G)), Evolution-Data Optimized or Evolution-Data Only (EV-DO), Advanced Mobile Phone System (1st Generation) (AMPS (1G)), Total Access Communication System/Extended Total Access Communication System (TACS/ETACS), Digital AMPS (2nd Generation) (D-AMPS (2G)), Push-to-talk (PTT), Mobile Telephone System (MTS), Improved Mobile Telephone System (IMTS), Advanced Mobile Telephone System (AMTS), OLT (Norwegian for Offentlig Landmobil Telefoni, Public Land Mobile Telephony), MTD (Swedish abbreviation for Mobiltelefonisystem D, or Mobile telephony system D), Public Automated Land Mobile (Autotel/PALM), ARP (Finnish for Autoradiopuhelin, "car radio phone"), NMT (Nordic Mobile Telephony), High capacity version of NTT (Nippon Telegraph and Telephone) (Hicap), Cellular Digital Packet Data (CDPD), Mobitex, DataTAC, Integrated Digital Enhanced Network (iDEN), Personal Digital Cellular (PDC), Circuit Switched Data (CSD), Personal Handy-phone System (PHS), Wideband Integrated Digital Enhanced Network (WiDEN), iBurst, Unlicensed Mobile Access (UMA), also referred to as also referred to as 3GPP Generic Access Network, or GAN standard), Zigbee, Bluetooth(r), Wireless Gigabit Alliance (WiGig) standard, mmWave standards in general (wireless systems operating at 10-300 GHz and above such as WiGig, IEEE 802.11ad, IEEE 802.11ay, and the like), technologies operating above 300 GHz and THz bands, (3GPP/LTE based or IEEE 802.11p and other) Vehicle-to-Vehicle (V2V) and Vehicle-to-X (V2X) and Vehicle-to-Infrastructure (V2I) and Infrastructure-to-Vehicle (I2V) communication technologies, 3GPP cellular V2X, DSRC (Dedicated Short Range Communications) communication systems such as Intelligent-Transport-Systems and others.

Aspects described herein can be used in the context of any spectrum management scheme including, for example, dedicated licensed spectrum, unlicensed spectrum, (licensed) shared spectrum (such as Licensed Shared Access (LSA) in 2.3-2.4 GHz, 3.4-3.6 GHz, 3.6-3.8 GHz and further frequencies and Spectrum Access System (SAS) in 3.55-3.7 GHz and further frequencies). Applicable exemplary spectrum bands include IMT (International Mobile Telecommunications) spectrum (including 450 - 470 MHz, 790 - 960 MHz, 1710 - 2025 MHz, 2110 - 2200 MHz, 2300 - 2400 MHz, 2500 - 2690 MHz, 698-790 MHz, 610 - 790 MHz, 3400 - 3600 MHz, to name a few), IMT-advanced spectrum, IMT-2020 spectrum (expected to include 3600-3800 MHz, 3.5 GHz bands, 700 MHz bands, bands within the 24.25-86 GHz range, for example), spectrum made available under the Federal Communications Commission's "Spectrum Frontier" 5G initiative (including 27.5 - 28.35 GHz, 29.1 - 29.25 GHz, 31 - 31.3 GHz, 37 - 38.6 GHz, 38.6 - 40 GHz, 42 - 42.5 GHz, 57 - 64 GHz, 71 - 76 GHz, 81 - 86 GHz and 92 - 94 GHz, etc), the ITS (Intelligent Transport Systems) band of 5.9 GHz (typically 5.85-5.925 GHz) and 63-64 GHz, bands currently allocated to WiGig such as WiGig Band 1 (57.24-59.40 GHz), WiGig Band 2 (59.40-61.56 GHz) and WiGig Band 3 (61.56-63.72 GHz) and WiGig Band 4 (63.72-65.88 GHz), the 70.2 GHz - 71 GHz band, any band between 65.88 GHz and 71 GHz, bands currently allocated to automotive radar applications such as 76-81 GHz, and future bands including 94-300 GHz and above. Furthermore, the scheme can be used on a secondary basis on bands such as the TV White Space bands (typically below 790 MHz) where in particular the 400 MHz and 700 MHz bands can be employed. Besides cellular applications, specific applications for vertical markets may be addressed, such as PMSE (Program Making and Special Events), medical, health, surgery, automotive, low-latency, drones, and the like.

Aspects described herein can also be applied to different Single Carrier or OFDM flavors (CP-OFDM, SC-FDMA, SC-OFDM, filter bank-based multicarrier (FBMC), OFDMA, etc.) and in particular 3GPP NR (New Radio) by allocating the OFDM carrier data bit vectors to the corresponding symbol resources.

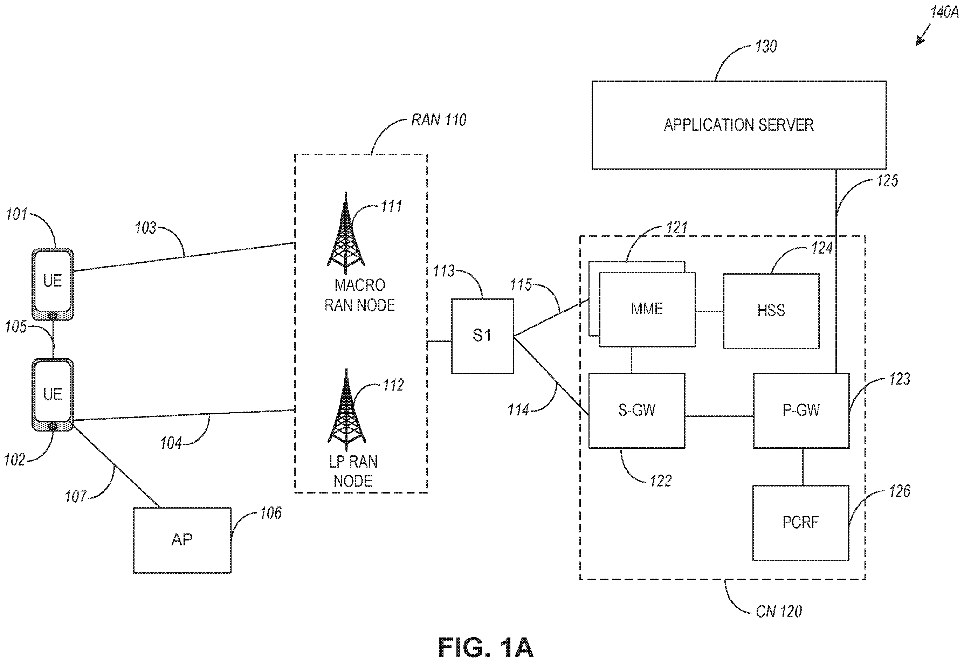

FIG. 1A illustrates an architecture of a network in accordance with some aspects. The network 140A is shown to include a user equipment (UE) 101 and a UE 102. The UEs 101 and 102 are illustrated as smartphones (e.g., handheld touchscreen mobile computing devices connectable to one or more cellular networks), but may also comprise any mobile or non-mobile computing device, such as Personal Data Assistants (PDAs), pagers, laptop computers, desktop computers, wireless handsets, drones, or any other computing device including a wired and/or wireless communications interface.

In some aspects, any of the UEs 101 and 102 can comprise an Internet-of-Things (IoT) UE, which can comprise a network access layer designed for low-power IoT applications utilizing short-lived UE connections. An IoT UE can utilize technologies such as machine-to-machine (M2M) or machine-type communications (MTC) for exchanging data with an MTC server or device via a public land mobile network (PLMN), Proximity-Based Service (ProSe) or device-to-device (D2D) communication, sensor networks, or IoT networks. The M2M or MTC exchange of data may be a machine-initiated exchange of data. An IoT network describes interconnecting IoT UEs, which may include uniquely identifiable embedded computing devices (within the Internet infrastructure), with short-lived connections. The IoT UEs may execute background applications (e.g., keep-alive messages, status updates, etc.) to facilitate the connections of the IoT network.

The UEs 101 and 102 may be configured to connect, e.g., communicatively couple, with a radio access network (RAN) 110. The RAN 110 may be, for example, an Evolved Universal Mobile Telecommunications System (UMTS) Terrestrial Radio Access Network (E-UTRAN), a NextGen RAN (NG RAN), or some other type of RAN. The UEs 101 and 102 utilize connections 103 and 104, respectively, each of which comprises a physical communications interface or layer (discussed in further detail below); in this example, the connections 103 and 104 are illustrated as an air interface to enable communicative coupling, and can be consistent with cellular communications protocols, such as a Global System for Mobile Communications (GSM) protocol, a code-division multiple access (CDMA) network protocol, a Push-to-Talk (PTT) protocol, a PTT over Cellular (POC) protocol, a Universal Mobile Telecommunications System (UMTS) protocol, a 3GPP Long Term Evolution (LTE) protocol, a fifth generation (5G) protocol, a New Radio (NR) protocol, and the like.

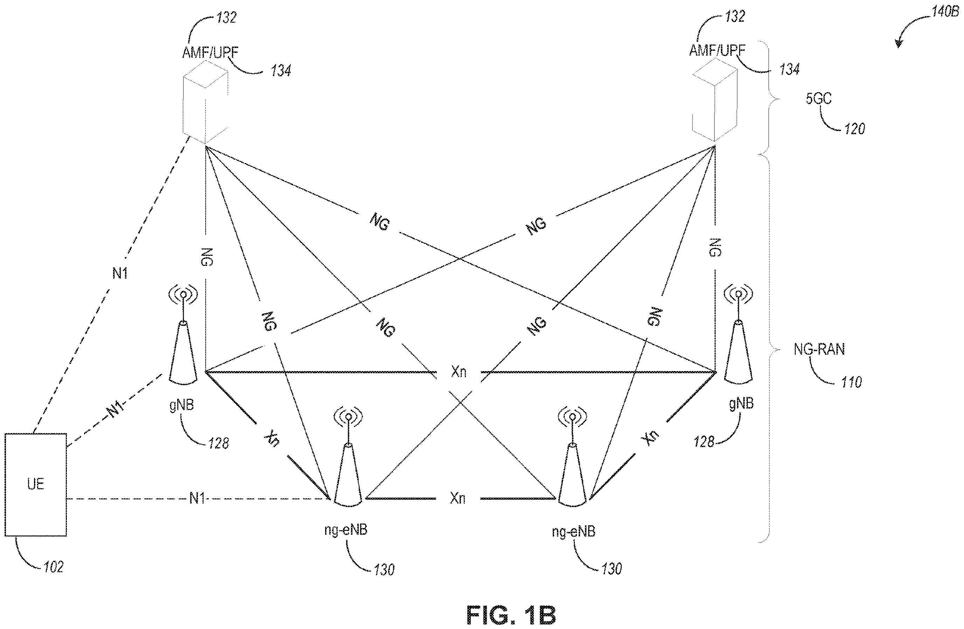

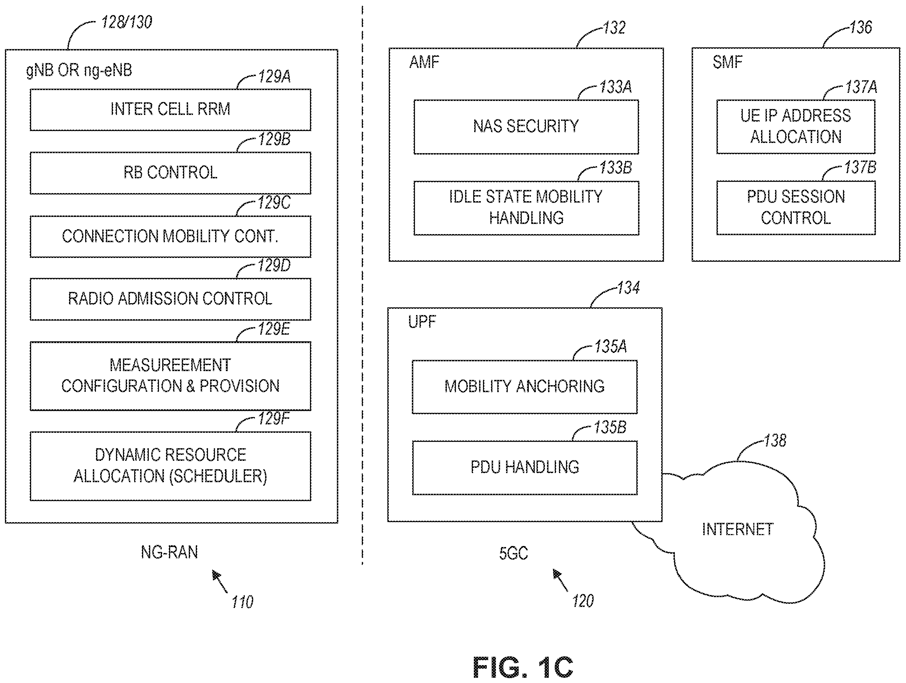

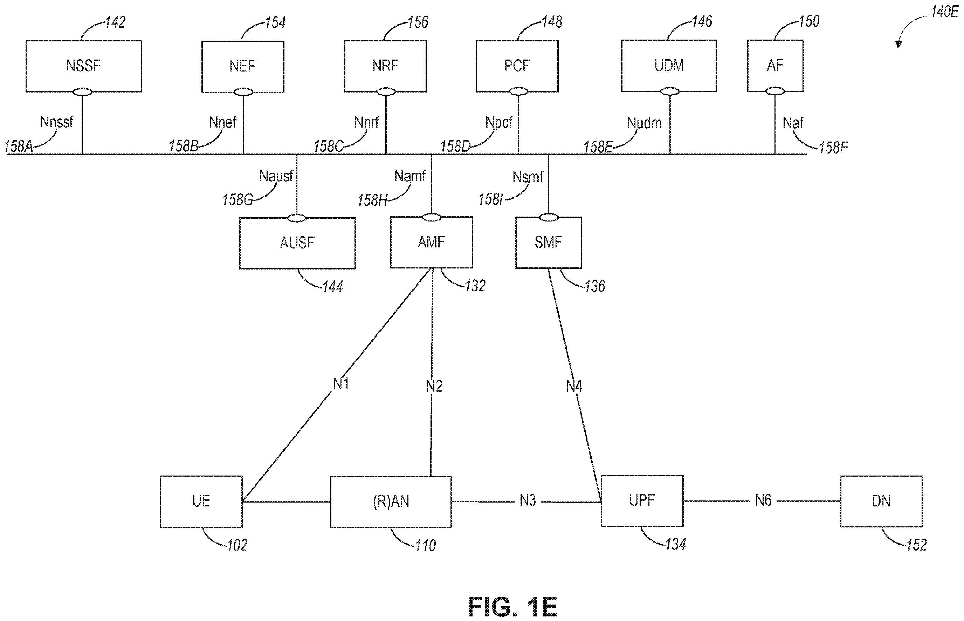

In some aspects, RAN 110 can include NG RAN or NG Core RAN. The NG RAN 110 can include various functions, such as, for example, an access and mobility management function (AMF), a session management function (SMF), a user plane function (UPF), a policy control function (PCF), a unified data management (UDM) function, and a network function (NF) repository function (NRF). The AMF can be used to manage access control and mobility, and can also include network slice selection functionality. The SMF can be configured to set up and manage various sessions according to a network policy. The UPF can be deployed in one or more configurations according to a desired service type. The PCF can be configured to provide a policy framework using network slicing, mobility management, and roaming (similar to PCRF in a 4G communication system). The UDM can be configured to store subscriber profiles and data (similar to an HSS in a 4G communication system). Various aspects of NG RAN and NG Core are discussed herein in reference to FIG. 1B, FIG. 1C, FIG. ID, and FIG. 1E.

In an aspect, the UEs 101 and 102 may further directly exchange communication data via a ProSe interface 105. The ProSe interface 105 may alternatively be referred to as a sidelink interface comprising one or more logical channels, including but not limited to a Physical Sidelink Control Channel (PSCCH), a Physical Sidelink Shared Channel (PSSCH), a Physical Sidelink Discovery Channel (PSDCH), and a Physical Sidelink Broadcast Channel (PSBCH).

The UE 102 is shown to be configured to access an access point (AP) 106 via connection 107. The connection 107 can comprise a local wireless connection, such as, for example, a connection consistent with any IEEE 802.11 protocol, according to which the AP 106 can comprise a wireless fidelity (WiFi^{®}) router. In this example, the AP 106 is shown to be connected to the Internet without connecting to the core network of the wireless system (described in further detail below).

The RAN 110 can include one or more access nodes that enable the connections 103 and 104. These access nodes (ANs) can be referred to as base stations (BSs), NodeBs, evolved NodeBs (eNBs), next Generation NodeBs (gNBs), RAN nodes, and the like, and can comprise ground stations (e.g., terrestrial access points) or satellite stations providing coverage within a geographic area (e.g., a cell). In some aspects, the communication nodes 111 and 112 can be transmission/reception points (TRPs). In instances when the communication nodes 111 and 112 are NodeBs (e.g., eNBs or gNBs), one or more TRPs can function within the communication cell of the NodeBs. The RAN 110 may include one or more RAN nodes for providing macrocells, e.g., macro RAN node 111, and one or more RAN nodes for providing femtocells or picocells (e.g., cells having smaller coverage areas, smaller user capacity, or higher bandwidth compared to macrocells), e.g., low power (LP) RAN node 112.

Any of the RAN nodes 111 and 112 can terminate the air interface protocol and can be the first point of contact for the UEs 101 and 102. In some aspects, any of the RAN nodes 111 and 112 can fulfill various logical functions for the RAN 110 including, but not limited to, radio network controller (RNC) functions such as radio bearer management, uplink and downlink dynamic radio resource management and data packet scheduling, and mobility management. In an example, any of the nodes 111 and/or 112 can be a new generation node-B (gNB), an evolved node-B (eNB) or another type of RAN node.

In accordance with some aspects, the UEs 101 and 102 can be configured to communicate using Orthogonal Frequency-Division Multiplexing (OFDM) communication signals with each other or with any of the RAN nodes 111 and 112 over a multicarrier communication channel in accordance various communication techniques, such as, but not limited to, an Orthogonal Frequency-Division Multiple Access (OFDMA) communication technique (e.g., for downlink communications) or a Single Carrier Frequency Division Multiple Access (SC-FDMA) communication technique (e.g., for uplink and ProSe or sidelink communications), although such aspects are not required. The OFDM signals can comprise a plurality of orthogonal subcarriers.

In some aspects, a downlink resource grid can be used for downlink transmissions from any of the RAN nodes 111 and 112 to the UEs 101 and 102, while uplink transmissions can utilize similar techniques. The grid can be a time-frequency grid, called a resource grid or time-frequency resource grid, which is the physical resource in the downlink in each slot. Such a time-frequency plane representation may be used for OFDM systems, which makes it applicable for radio resource allocation. Each column and each row of the resource grid may correspond to one OFDM symbol and one OFDM subcarrier, respectively. The duration of the resource grid in the time domain may correspond to one slot in a radio frame. The smallest time-frequency unit in a resource grid may be denoted as a resource element. Each resource grid may comprise a number of resource blocks, which describe mapping of certain physical channels to resource elements. Each resource block may comprise a collection of resource elements; in the frequency domain, this may, in some aspects, represent the smallest quantity of resources that currently can be allocated. There may be several different physical downlink channels that are conveyed using such resource blocks.

The physical downlink shared channel (PDSCH) may carry user data and higher-layer signaling to the UEs 101 and 102. The physical downlink control channel (PDCCH) may carry information about the transport format and resource allocations related to the PDSCH channel, among other things. It may also inform the UEs 101 and 102 about the transport format, resource allocation, and H-ARQ (Hybrid Automatic Repeat Request) information related to the uplink shared channel. Typically, downlink scheduling (assigning control and shared channel resource blocks to the UE 102 within a cell) may be performed at any of the RAN nodes 111 and 112 based on channel quality information fed back from any of the UEs 101 and 102. The downlink resource assignment information may be sent on the PDCCH used for (e.g., assigned to) each of the UEs 101 and 102.

The PDCCH may use control channel elements (CCEs) to convey the control information. Before being mapped to resource elements, the PDCCH complex-valued symbols may first be organized into quadruplets, which may then be permuted using a sub-block interleaver for rate matching. Each PDCCH may be transmitted using one or more of these CCEs, where each CCE may correspond to nine sets of four physical resource elements known as resource element groups (REGs). Four Quadrature Phase Shift Keying (QPSK) symbols may be mapped to each REG. The PDCCH can be transmitted using one or more CCEs, depending on the size of the downlink control information (DCI) and the channel condition. There can be four or more different PDCCH formats defined in LTE with different numbers of CCEs (e.g., aggregation level, L=1, 2, 4, or 8).

Some aspects may use concepts for resource allocation for control channel information that are an extension of the above-described concepts. For example, some aspects may utilize an enhanced physical downlink control channel (EPDCCH) that uses PDSCH resources for control information transmission. The EPDCCH may be transmitted using one or more enhanced control channel elements (ECCEs). Similar to above, each ECCE may correspond to nine sets of four physical resource elements known as an enhanced resource element groups (EREGs). An ECCE may have other numbers of EREGs according to some arrangements.

The RAN 110 is shown to be communicatively coupled to a core network (CN) 120 via an S1 interface 113. In aspects, the CN 120 may be an evolved packet core (EPC) network, a NextGen Packet Core (NPC) network, or some other type of CN (e.g., as illustrated in reference to FIGS. 1B-1E). In this aspect, the S1 interface 113 is split into two parts: the S1-U interface 114, which carries traffic data between the RAN nodes 111 and 112 and the serving gateway (S-GW) 122, and the S1-mobility management entity (MME) interface 115, which is a signaling interface between the RAN nodes 111 and 112 and MMEs 121.

In this aspect, the CN 120 comprises the MMEs 121, the S-GW 122, the Packet Data Network (PDN) Gateway (P-GW) 123, and a home subscriber server (HSS) 124. The MMEs 121 may be similar in function to the control plane of legacy Serving General Packet Radio Service (GPRS) Support Nodes (SGSN). The MMEs 121 may manage mobility aspects in access such as gateway selection and tracking area list management. The HSS 124 may comprise a database for network users, including subscription-related information to support the network entities' handling of communication sessions. The CN 120 may comprise one or several HSSs 124, depending on the number of mobile subscribers, on the capacity of the equipment, on the organization of the network, etc. For example, the HSS 124 can provide support for routing/roaming, authentication, authorization, naming/addressing resolution, location dependencies, etc.

The S-GW 122 may terminate the S1 interface 113 towards the RAN 110, and routes data packets between the RAN 110 and the CN 120. In addition, the S-GW 122 may be a local mobility anchor point for inter-RAN node handovers and also may provide an anchor for inter-3GPP mobility. Other responsibilities of the S-GW 122 may include lawful intercept, charging, and some policy enforcement.

The P-GW 123 may terminate a SGi interface toward a PDN. The P-GW 123 may route data packets between the EPC network 123 and external networks such as a network including the application server 130 (alternatively referred to as application function (AF)) via an Internet Protocol (IP) interface 125. Generally, the application server 130 may be an element offering applications that use IP bearer resources with the core network (e.g., UMTS Packet Services (PS) domain, LTE PS data services, etc.). In this aspect, the P-GW 123 is shown to be communicatively coupled to an application server 130 via an IP communications interface 125. The application server 130 can also be configured to support one or more communication services (e.g., Voice-over-Internet Protocol (VoIP) sessions, PTT sessions, group communication sessions, social networking services, etc.) for the UEs 101 and 102 via the CN 120.

The P-GW 123 may further be a node for policy enforcement and charging data collection. Policy and Charging Rules Function (PCRF) 126 is the policy and charging control element of the CN 120. In a non-roaming scenario, in some aspects, there may be a single PCRF in the Home Public Land Mobile Network (HPLMN) associated with a UE's Internet Protocol Connectivity Access Network (IP-CAN) session. In a roaming scenario with local breakout of traffic, there may be two PCRFs associated with a UE's IP-CAN session: a Home PCRF (H-PCRF) within a HPLMN and a Visited PCRF (V-PCRF) within a Visited Public Land Mobile Network (VPLMN). The PCRF 126 may be communicatively coupled to the application server 130 via the P-GW 123. The application server 130 may signal the PCRF 126 to indicate a new service flow and select the appropriate Quality of Service (QoS) and charging parameters. The PCRF 126 may provision this rule into a Policy and Charging Enforcement Function (PCEF) (not shown) with the appropriate traffic flow template (TFT) and QoS class of identifier (QCI), which commences the QoS and charging as specified by the application server 130.

In an example, any of the nodes 111 or 112 can be configured to communicate to the UEs 101/102 (e.g., dynamically) an antenna panel selection and a receive (Rx) beam selection that can be used by the UE for data reception on a physical downlink shared channel (PDSCH) as well as for channel state information reference signal (CSI-RS) measurements and channel state information (CSI) calculation.

In an example, any of the nodes 111 or 112 can be configured to communicate to the UEs 101/102 (e.g., dynamically) an antenna panel selection and a transmit (Tx) beam selection that can be used by the UE for data transmission on a physical uplink shared channel (PUSCH) as well as for sounding reference signal (SRS) transmission.

In some aspects, LTE-based communications can use a fixed transmission time interval (TTI) length of 1 ms with 12-14 symbols, or a smaller TTI can also be used (e.g., in NR-based communications). The transmission of a request, grant, or data can be achieved by using one or more subframes with a TTI. In this regard, the TTI length can impact both the time for transmitting over the air as well as the processing time at transmitters and receivers.

FIG. 1B is a simplified diagram of a next generation (NG) system architecture in accordance with some aspects. Referring to FIG. 1B, the NG system architecture 140B includes NG-RAN 110 and a 5G network core (5GC) 120. The NG-RAN 110 can include a plurality of nodes, such as gNBs 128 and ng-eNBs 130. The gNBs 128 and the ng-eNBs 130 can be communicatively coupled to the UE 102 via, e.g., an N1 interface.

The 5GC 120 includes an access and mobility management function (AMF) 132 and/or a user plane function (UPF) 134. The AMF 132 and the UPF 134 can be communicatively coupled to the gNBs 128 and the ng-eNBs 130 via NG interfaces. More specifically, in some aspects, the gNBs 128 and the ng-eNBs 130 can be connected to the AMF 132 by NG-C interfaces, and to the UPF 134 by NG-U interfaces. The gNBs 128 and the ng-eNBs 130 can be coupled to each other via Xn interfaces.

In some aspects, a gNB 128 can include a node providing new radio (NR) user plane and control plane protocol termination towards the UE, and is connected via the NG interface to the 5GC 120. In some aspects, an ng-eNB 130 can include a node providing evolved universal terrestrial radio access (E-UTRA) user plane and control plane protocol terminations towards the UE, and is connected via the NG interface to the 5GC 120.

In some aspects, each of the gNBs 128 and the ng-eNBs 130 can be implemented as a base station, a mobile edge server, a small cell, a home eNB, and so forth.

FIG. 1C illustrates a functional split between NG - RAN and the 5G Core (5GC) in accordance with some aspects. Referring to FIG. 1C, there is illustrated a more detailed diagram of the functionalities that can be performed by the gNBs 128 and the ng-eNBs 130 within the NG-RAN 110, as well as the AMF 132, the UPF 134, and the SMF 136 within the 5GC 120. In some aspects, the 5GC 120 can provide access to the Internet 138 to one or more devices via the NG-RAN 110.

In some aspects, the gNBs 128 and the ng-eNBs 130 can be configured to host the following functions: functions for Radio Resource Management (e.g., inter-cell radio resource management 129A, radio bearer control 129B, radio admission control 129D, connection mobility control 129C, dynamic allocation of resources to UEs in both uplink and downlink (scheduling) 129F); IP header compression, encryption and integrity protection of data; selection of an AMF at UE attachment when no routing to an AMF can be determined from the information provided by the UE; routing of User Plane data towards UPF(s); routing of Control Plane information towards AMF; connection setup and release; scheduling and transmission of paging messages (originated from the AMF); scheduling and transmission of system broadcast information (originated from the AMF or Operation and Maintenance); measurement and measurement reporting configuration for mobility and scheduling 129E; transport level packet marking in the uplink; session management; support of network slicing; QoS flow management and mapping to data radio bearers; support of UEs in RRC INACTIVE state; distribution function for non-access stratus (NAS) messages; radio access network sharing; dual connectivity; and tight interworking between NR and E-UTRA, to name a few.

In some aspects, the AMF 132 can be configured to host the following functions, for example: NAS signaling termination; NAS signaling security 133A; access stratus (AS) security control; inter core network (CN) node signaling for mobility between 3GPP access networks; idle mode mobility handling 133B, including mobile device, such as a UE, reachability (e.g., control and execution of paging retransmission); registration area management; support of intra-system and inter-system mobility; access authentication; access authorization including check of roaming rights; mobility management control (subscription and policies); support of network slicing; and/or SMF selection, among other functions.

The UPF 134 can be configured to host the following functions, for example: mobility anchoring 135A (e.g., anchor point for Intra-/Inter-RAT mobility); packet data unit (PDU) handling 135B (e.g., external PDU session point of interconnect to data network); packet routing and forwarding; packet inspection and user plane part of policy rule enforcement; traffic usage reporting; uplink classifier to support routing traffic flows to a data network; branching point to support multi-homed PDU session; QoS handling for user plane, e.g. packet filtering, gating, UL/DL rate enforcement; uplink traffic verification (SDF to QoS flow mapping); and/or downlink packet buffering and downlink data notification triggering, among other functions.

The Session Management function (SMF) 136 can be configured to hosts the following functions, for example: session management; UE IP address allocation and management 137A; selection and control of UP function; PDU session control 137B, including configuring traffic steering at UPF to route traffic to proper destination; control part of policy enforcement and QoS; and/or downlink data notification, among other functions.

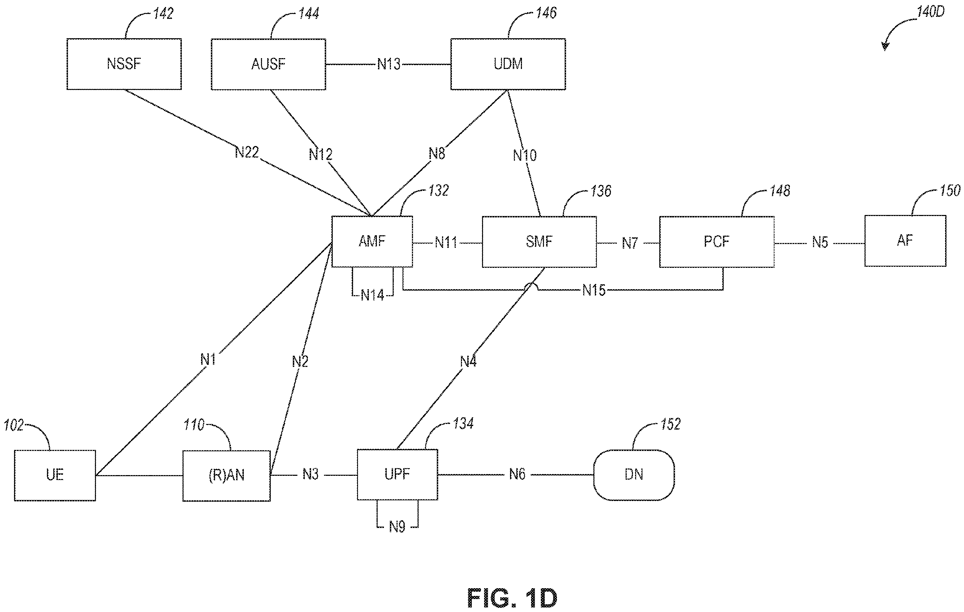

FIG. 1D and FIG. 1E illustrate a non-roaming 5G system architecture in accordance with some aspects. Referring to FIG. ID, there is illustrated a 5G system architecture 140D in a reference point representation. More specifically, UE 102 can be in communication with RAN 110 as well as one or more other 5GC network entities. The 5GC of system architecture 140D includes a plurality of network functions (NFs), such as access and mobility management function (AMF) 132, session management function (SMF) 136, policy control function (PCF) 148, application function (AF) 150, user plane function (UPF) 134, network slice selection function (NSSF) 142, authentication server function (AUSF) 144, and unified data management (UDM) 146. The UPF 134 can provide a connection to a data network (DN) 152, which can include, for example, operator services, Internet access, or third-party services.

Referring to FIG. IE, there is illustrated a 5G system architecture 140E and a service-based representation. System architecture 140E can be substantially similar to (or the same as) system architecture 140D. In addition to the network entities illustrated in FIG. ID, system architecture 140E can also include a network exposure function (NEF) 154 and a network repository function (NRF) 156.

In some aspects, the 5G system architectures can be service-based and interaction between network functions can be represented by corresponding point-to-point reference points Ni (as illustrated in FIG. ID) or as service-based interfaces (as illustrated in FIG. IE).

A reference point representation shows that an interaction can exist between corresponding NF services. For example, FIG. 1D illustrates the following reference points: N1 (between the UE and the AMF), N2 (between the RAN and the AMF), N3 (between the RAN and the UPF), N4 (between the SMF and the UPF), N5 (between the PCF and the AF), N6 (between the UPF and the DN), N7 (between the SMF and the PCF), N8 (between the UDM and the AMF), N9 (between two UPFs), N10 (between the UDM and the SMF), N11 (between the AMF and the SMF), N12 (between the AUSF and the AMF), N13 (between the AUSF and the UDM), N14 (between two AMFs), N15 (between the PCF and the AMF in case of a non-roaming scenario, or between the PCF and a visited network and AMF in case of a roaming scenario), N16 (between two SMFs; not illustrated in FIG. 1D), and N22 (between AMF and NSSF). Other reference point representations not shown in FIG. 1D can also be used.

In some aspects, as illustrated in FIG. IE, service-based representations can be used to represent network functions within the control plane that enable other authorized network functions to access their services. In this regard, 5G system architecture 140E can include the following service-based interfaces: Namf 158H (a service-based interface exhibited by the AMF 132), Nsmf 158I (a service-based interface exhibited by the SMF 136), Nnef 158B (a service-based interface exhibited by the NEF 154), Npcf 158D (a service-based interface exhibited by the PCF 148), a Nudm 158E (a service-based interface exhibited by the UDM 146), Naf 158F (a service-based interface exhibited by the AF 150), Nnrf 158C (a service-based interface exhibited by the NRF 156), Nnssf 158A (a service-based interface exhibited by the NSSF 142), Nausf 158G (a service-based interface exhibited by the AUSF 144). Other service-based interfaces (e.g., Nudr, N5g-eir, and Nudsf) not shown in FIG. 1E can also be used.

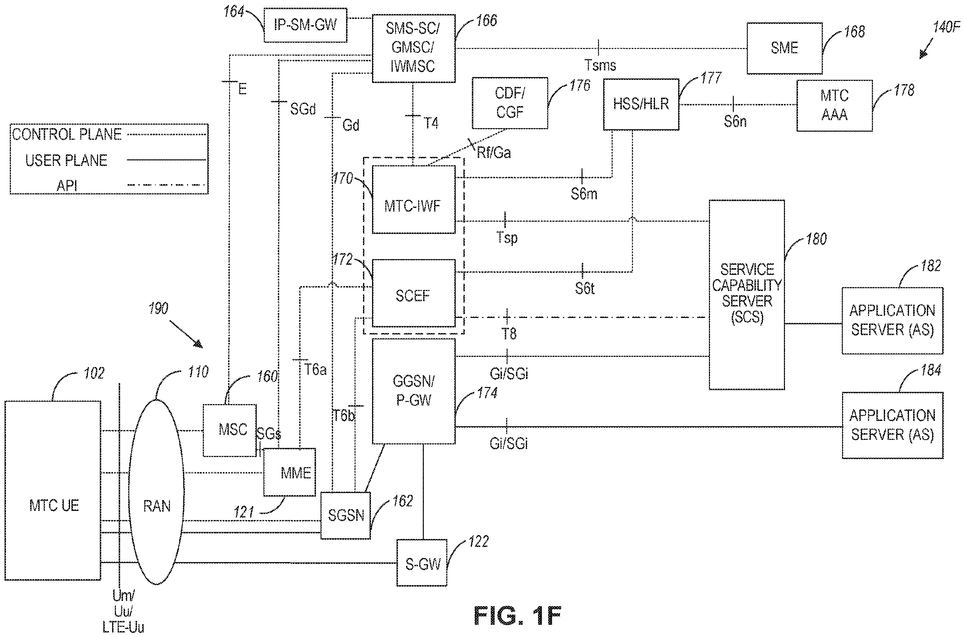

FIG. 1F illustrates an example CIoT network architecture in accordance with some aspects. Referring to FIG. IF, the CIoT architecture 140F can include the UE 102 and the RAN 110 coupled to a plurality of core network entities. In some aspects, the UE 102 can be machine-type communication (MTC) UE. The CIoT network architecture 140F can further include a mobile services switching center (MSC) 160, MME 121, a serving GPRS support note (SGSN) 162, a S-GW 122, an IP-Short-Message-Gateway (IP-SM-GW) 164, a Short Message Service Service Center (SMS-SC)/gateway mobile service center (GMSC)/Interworking MSC (IWMSC) 166, MTC interworking function (MTC-IWF) 170, a Service Capability Exposure Function (SCEF) 172, a gateway GPRS support node (GGSN)/Patent-GW 174, a charging data function (CDF)/charging gateway function (CGF) 176, a home subscriber server (HSS)/a home location register (HLR) 177, short message entities (SME) 168, MTC authorization, authentication, and accounting (MTC AAA) server 178, a service capability server (SCS) 180, and application servers (AS) 182 and 184.

In some aspects, the SCEF 172 can be configured to securely expose services and capabilities provided by various 3GPP network interfaces. The SCEF 172 can also provide means for the discovery of the exposed services and capabilities, as well as access to network capabilities through various network application programming interfaces (e.g., API interfaces to the SCS 180).

FIG. 1F further illustrates various reference points between different servers, functions, or communication nodes of the CIoT architecture 140F. Some example reference points related to MTC - IWF 170 and SCEF 172 include the following: Tsms (a reference point used by an entity outside the 3GPP network to communicate with UEs used for MTC via SMS), Tsp (a reference point used by a SCS to communicate with the MTC-IWF related control plane signaling), T4 (a reference point used between MTC-IWF 170 and the SMS-SC 166 in the HPLMN), T6a (a reference point used between SCEF 172 and serving MME 121), T6b (a reference point used between SCEF 172 and serving SGSN 162), T8 (a reference point used between the SCEF 172 and the SCS/AS 180/182), S6m (a reference point used by MTC-IWF 170 to interrogate HSS/HLR 177), S6n (a reference point used by MTC-AAA 178 to interrogate HSS/HLR 177), and S6t (a reference point used between SCEF 172 and HSS 177).

In some aspects, the CIoT UE 102 can be configured to communicate with one or more entities within the CIoT architecture 140F via the RAN 110 according to a Non-Access Stratum (NAS) protocol, and using one or more reference points, such as a narrowband air interface, for example, based on one or more communication technologies, such as Orthogonal Frequency-Division Multiplexing (OFDM) technology. As used herein, the term "CIoT UE" refers to a UE capable of CIoT optimizations, as part of a CIoT communications architecture.

In some aspects, the NAS protocol can support a set of NAS messages for communication between the CIoT UE 102 and an Evolved Packet System (EPS) Mobile Management Entity (MME) 121 and SGSN 162.

In some aspects, the CloT network architecture 140F can include a packet data network, an operator network, or a cloud service network, having, for example, among other things, a Service Capability Server (SCS) 180, an Application Server (AS) 182, or one or more other external servers or network components.

The RAN 110 can be coupled to the HSS/AAA servers 177178 using one or more reference points including, for example, an air interface based on an S6a reference point, and configured to authenticate/authorize CloT UE 102 access the CloT network. The RAN 110 can be coupled to the network 140F using one or more other reference points including, for example, an air interface corresponding to an SGi/Gi interface for 3GPP accesses. The RAN 110 can be coupled to the SCEF 172 using, for example, an air interface based on a T6a/T6b reference point, for service capability exposure. In some aspects, the SCEF 172 may act as an API GW towards a 3rd party application server such as AS 182. The SCEF 172 can be coupled to the HSS/AAA servers using an S6t reference point, and can further expose an Application Programming Interface to network capabilities.

In certain examples, one or more of the CloT devices disclosed herein, such as the CloT UE 102, the CloT RAN 110, etc., can include one or more other non-CIoT devices, or non-CIoT devices acting as CloT devices, or having functions of a CloT device. For example, the CloT UE 102 can include a smart phone, a tablet computer, or one or more other electronic device acting as a CloT device for a specific function, while having other additional functionality.

In some aspects, the RAN 110 can include a CloT enhanced Node B (CIoT eNB) 111 communicatively coupled to the CloT Access Network Gateway (CIoT GW) 190. In certain examples, the RAN 110 can include multiple base stations (e.g., CloT eNBs) connected to the CloT GW 190, which can include MSC 160, MME 121, SGSN 162, and/or S - GW 122. In certain examples, internal architecture of RAN 110 and CloT GW 190 may be left to the implementation and need not be standardized.

As used herein, the term circuitry may refer to, be part of, or include an Application Specific Integrated Circuit (ASIC) or other special purpose circuit, an electronic circuit, a processor (shared, dedicated, or group), or memory (shared, dedicated, or group) executing one or more software or firmware programs, a combinational logic circuit, or other suitable hardware components that provide the described functionality. In some aspects, the circuitry may be implemented in, or functions associated with the circuitry may be implemented by, one or more software or firmware modules. In some aspects, circuitry may include logic, at least partially operable in hardware. In some aspects, circuitry as well as modules disclosed herein may be implemented in combinations of hardware, software and/or firmware. In some aspects, functionality associated with a circuitry can be distributed across more than one piece of hardware or software/firmware module. In some aspects, modules (as disclosed herein) may include logic, at least partially operable in hardware. Aspects described herein may be implemented into a system using any suitably configured hardware or software.

In some aspects, non-IP data delivery via the SCEF 172 can include one or more of the techniques described herein in connection with a reliable data service (RDS) protocol to determine if data was successfully delivered to the UE (e.g. in case of UE radio link failure, or if the UE is out of coverage) and for the UE to determine if the data was successfully delivered to the SCEF (e.g. in case of T6a/b connection failure, SCEF congestion etc.). In some aspects, mobile network operators (MNOs) can offer reliable data delivery via the RDS protocol as value added service to their customers (e.g., to avoid the overhead of extra UE battery consumption that can happen due to application level acknowledgement). In aspects when RDS functionalities are enabled, a protocol as described herein can be used between the end-points of the non-IP PDN connection.

In some aspects, RDS protocol functionalities described herein can include one or more of the following:

RDS protocol functionalities described herein can support reliable data delivery between the UE and the SCEF by acknowledging the delivery of data.

RDS protocol functionalities described herein can support disabling/enabling reliable data delivery capability per UE per PDN connection. The protocol use can be negotiated between the UE and the SCEF/3rd party service provider.

RDS protocol functionalities described herein can be configured to allow detection and elimination of duplicate PDUs at the receiving endpoint.

RDS protocol functionalities described herein can be configured to support multiple UEs, and each UE can be configured to connect to multiple SCEFs. Within each UE, multiple applications can be configured to simultaneously conduct non-IP data transfers with their peer entities.

RDS protocol functionalities described herein can be configured so that overhead associated with the header size of the protocol can be kept to a minimum in consideration of the fact that the UE may be an NB-IoT UE and may be in enhanced coverage mode.

In some aspects, an RDS protocol providing functionalities described herein can be configured as a peer-to-peer protocol with a sliding window of 4 that allows an originating device (or originator) to send multiple packets (e.g., up to the size of sliding window) without waiting for acknowledgement. The receiving device (or receiver) can in turn send block acknowledgement for all the packets received. Both acknowledged and unacknowledged mode transfers can be supported with in-sequence delivery.

In some aspects, an RDS protocol providing functionalities described herein can be configured as a peer-to-peer protocol with a sliding window of 1 that forces the originator to send a single packet and then wait for acknowledgement. The receiver can be configured to send the acknowledgement for each packet received. In some aspects, both acknowledged and unacknowledged mode transfers can be supported with in sequence delivery. Additional functionalities of the RDS protocol are discussed herein below.

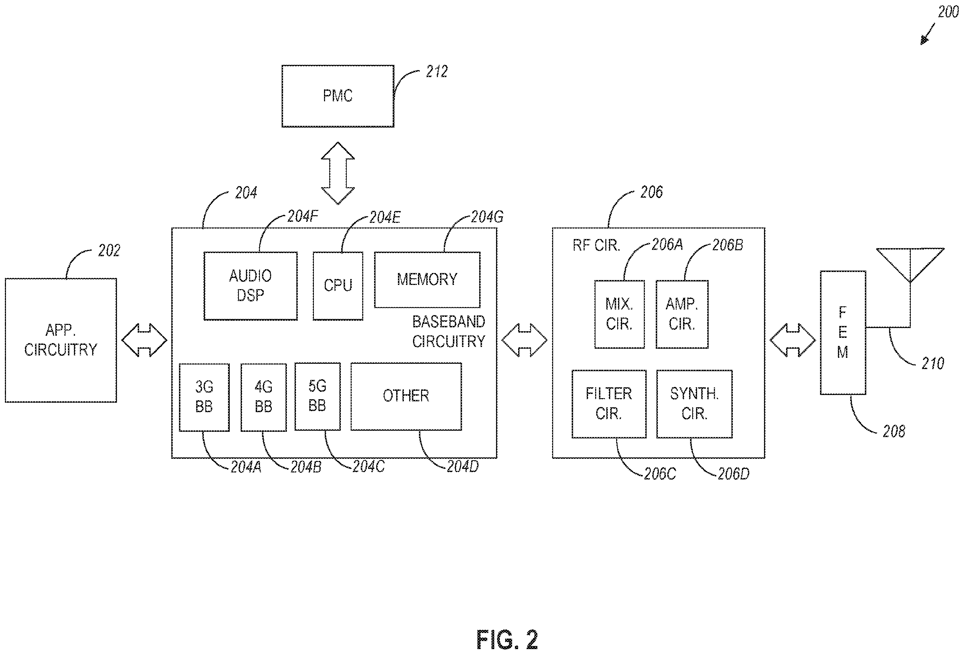

FIG. 2 illustrates example components of a device 200 in accordance with some aspects. In some aspects, the device 200 may include application circuitry 202, baseband circuitry 204, Radio Frequency (RF) circuitry 206, front-end module (FEM) circuitry 208, one or more antennas 210, and power management circuitry (PMC) 212coupled together at least as shown. The components of the illustrated device 200 may be included in a UE or a RAN node. In some aspects, the device 200 may include fewer elements (e.g., a RAN node may not utilize application circuitry 202, and instead include a processor/controller to process IP data received from an EPC). In some aspects, the device 200 may include additional elements such as, for example, memory/storage, display, camera, sensor, and/or input/output (I/O) interface elements. In other aspects, the components described below may be included in more than one device (e.g., said circuitries may be separately included in more than one device for Cloud-RAN (C-RAN) implementations).

The application circuitry 202 may include one or more application processors. For example, the application circuitry 202 may include circuitry such as, but not limited to, one or more single-core or multi-core processors. The processor(s) may include any combination of general-purpose processors, special-purpose processors, and dedicated processors (e.g., graphics processors, application processors, etc.). The processors may be coupled with, and/or may include, memory/storage and may be configured to execute instructions stored in the memory/storage to enable various applications or operating systems to run on the device 200. In some aspects, processors of application circuitry 202 may process IP data packets received from an EPC.

The baseband circuitry 204 may include circuitry such as, but not limited to, one or more single-core or multi-core processors. The baseband circuitry 204 may include one or more baseband processors or control logic to process baseband signals received from a receive signal path of the RF circuitry 206 and to generate baseband signals for a transmit signal path of the RF circuitry 206. Baseband processing circuity 204 may interface with the application circuitry 202 for generation and processing of the baseband signals and for controlling operations of the RF circuitry 206. For example, in some aspects, the baseband circuitry 204 may include a third generation (3G) baseband processor 204A, a fourth generation (4G) baseband processor 204B, a fifth generation (5G) baseband processor 204C, or other baseband processor(s) 204D for other existing generations, generations in development or to be developed in the future (e.g., second generation (2G), sixth generation (6G), etc.). The baseband circuitry 204 (e.g., one or more of baseband processors 204A-D) may handle various radio control functions that enable communication with one or more radio networks via the RF circuitry 206. In other aspects, some or all of the functionality of baseband processors 204A-D may be included in modules stored in the memory 204G and executed via a Central Processing Unit (CPU) 204E. The radio control functions may include, but are not limited to, signal modulation/demodulation, encoding/decoding, radio frequency shifting, etc. In some aspects, modulation/demodulation circuitry of the baseband circuitry 204 may include Fast-Fourier Transform (FFT), precoding, or constellation mapping/demapping functionality. In some aspects, encoding/decoding circuitry of the baseband circuitry 204 may include convolution, tail-biting convolution, turbo, Viterbi, or Low Density Parity Check (LDPC) encoder/decoder functionality. Aspects of modulation/demodulation and encoder/decoder functionality are not limited to these examples and may include other suitable functionality in other aspects.

In some aspects, the baseband circuitry 204 may include one or more audio digital signal processor(s) (DSP) 204F. The audio DSP(s) 204F may be include elements for compression/decompression and echo cancellation and may include other suitable processing elements in other aspects. Components of the baseband circuitry may be suitably combined in a single chip, a single chipset, or disposed on a same circuit board in some aspects. In some aspects, some or all of the constituent components of the baseband circuitry 204 and the application circuitry 202 may be implemented together such as, for example, on a system on a chip (SOC).

In some aspects, the baseband circuitry 204 may provide for communication compatible with one or more radio technologies. For example, in some aspects, the baseband circuitry 204 may support communication with an evolved universal terrestrial radio access network (EUTRAN) or other wireless metropolitan area networks (WMAN), a wireless local area network (WLAN), and/or a wireless personal area network (WPAN). Baseband circuitry 204 configured to support radio communications of more than one wireless protocol may be referred to as multi-mode baseband circuitry, in some aspects.

RF circuitry 206 may enable communication with wireless networks using modulated electromagnetic radiation through a non-solid medium. In various aspects, the RF circuitry 206 may include switches, filters, amplifiers, etc. to facilitate the communication with the wireless network. RF circuitry 206 may include a receive signal path which may include circuitry to down-convert RF signals received from the FEM circuitry 208 and provide baseband signals to the baseband circuitry 204. RF circuitry 206 may also include a transmit signal path which may include circuitry to up-convert baseband signals provided by the baseband circuitry 204 and provide RF output signals to the FEM circuitry 208 for transmission.

In some aspects, the receive signal path of the RF circuitry 206 may include a mixer 206A, an amplifier 206B, and a filter 206C. In some aspects, the transmit signal path of the RF circuitry 206 may include a filter 206C and a mixer 206A. RF circuitry 206 may also include a synthesizer 206D for synthesizing a frequency for use by the mixer 206A of the receive signal path and the transmit signal path. In some aspects, the mixer 206A of the receive signal path may be configured to down-convert RF signals received from the FEM circuitry 208 based on the synthesized frequency provided by synthesizer 206D. The amplifier 206B may be configured to amplify the down-converted signals and the filter 206C may be a low-pass filter (LPF) or band-pass filter (BPF) configured to remove unwanted signals from the down-converted signals to generate output baseband signals. Output baseband signals may be provided to the baseband circuitry 204 for further processing. In some aspects, the output baseband signals may optionally be zero-frequency baseband signals. In some aspects, mixer 206A of the receive signal path may comprise passive mixers.

In some aspects, the mixer 206A of the transmit signal path may be configured to up-convert input baseband signals based on the synthesized frequency provided by the synthesizer 206D to generate RF output signals for the FEM circuitry 208. The baseband signals may be provided by the baseband circuitry 204 and may be filtered by filter 206C.

In some aspects, the mixer 206A of the receive signal path and the mixer 206A of the transmit signal path may include two or more mixers and may be arranged for quadrature downconversion and upconversion, respectively. In some aspects, the mixer 206A of the receive signal path and the mixer 206A of the transmit signal path may include two or more mixers and may be arranged for image rejection (e.g., Hartley image rejection). In some aspects, the mixer 206A of the receive signal path and the mixer 206A may be arranged for direct downconversion and direct upconversion, respectively. In some aspects, the mixer 206A of the receive signal path and the mixer 206A of the transmit signal path may be configured for super-heterodyne operation.

In some aspects, the output baseband signals and the input baseband signals may optionally be analog baseband signals. According to some alternate aspects, the output baseband signals and the input baseband signals may be digital baseband signals. In these alternate aspects, the RF circuitry 206 may include analog-to-digital converter (ADC) and digital-to-analog converter (DAC) circuitry and the baseband circuitry 204 may include a digital baseband interface to communicate with the RF circuitry 206.

In some dual-mode aspects, a separate radio IC circuitry may optionally be provided for processing signals for each spectrum

In some aspects, the synthesizer 206D may optionally be a fractional-N synthesizer or a fractional N/N+1 synthesizer, although other types of frequency synthesizers may be suitable. For example, the synthesizer 206D may be a delta-sigma synthesizer, a frequency multiplier, or a synthesizer comprising a phase-locked loop with a frequency divider.

The synthesizer 206D may be configured to synthesize an output frequency for use by the mixer circuitry 206A of the RF circuitry 206 based on a frequency input and a divider control input. In some aspects, the synthesizer 206D may be a fractional N/N+1 synthesizer.

In some aspects, frequency input may be provided by a voltage controlled oscillator (VCO), although that is not a requirement. Divider control input may be provided, for example, by either the baseband circuitry 204 or the applications processor 202 depending on the desired output frequency. In some aspects, a divider control input (e.g., N) may be determined from a look-up table based on a channel indicated by the applications processor 202.

Synthesizer circuitry 206D of the RF circuitry 206 may include a divider, a delay-locked loop (DLL), a multiplexer and a phase accumulator. In some aspects, the divider may be a dual modulus divider (DMD) and the phase accumulator may be a digital phase accumulator (DPA). In some aspects, the DMD may be configured to divide the input signal by either N or N+1 (e.g., based on a carry out) to provide a fractional division ratio. In some example aspects, the DLL may include a set of cascaded, tunable, delay elements, a phase detector, a charge pump and a D-type flip-flop. In these aspects, the delay elements may be configured to break a VCO period up into Nd equal packets of phase, where Nd is the number of delay elements in the delay line. In this way, the DLL provides negative feedback to assist in keeping the total delay through the delay line to one VCO cycle.

In some aspects, synthesizer circuitry 206D may be configured to generate a carrier frequency as the output frequency, while in other aspects, the output frequency may be a multiple of the carrier frequency (e.g., twice the carrier frequency, or four times the carrier frequency) and may be used in conjunction with quadrature generator and divider circuitry to generate multiple signals at the carrier frequency with multiple different phases with respect to each other. In some aspects, the output frequency may be a LO frequency (fLO). In some aspects, the RF circuitry 206 may include an IQ/polar converter.

FEM circuitry 208 may include a receive signal path which may include circuitry configured to operate on RF signals received from one or more antennas 210, and/or to amplify the received signals and provide the amplified versions of the received signals to the RF circuitry 206 for further processing. FEM circuitry 208 may also include a transmit signal path which may include circuitry configured to amplify signals for transmission provided by the RF circuitry 206 for transmission by one or more of the one or more antennas 210. In various aspects, the amplification through the transmit signal paths or the receive signal paths may be done in part or solely in the RF circuitry 206, in part or solely in the FEM 208, or in both the RF circuitry 206 and the FEM 208.

In some aspects, the FEM circuitry 208 may include a TX/RX switch to switch between transmit mode and receive mode operation. The FEM circuitry may include a receive signal path and a transmit signal path. The receive signal path of the FEM circuitry may include an LNA to amplify received RF signals and provide the amplified received RF signals as an output (e.g., to the RF circuitry 206). The transmit signal path of the FEM circuitry 208 may include a power amplifier (PA) to amplify input RF signals (e.g., provided by RF circuitry 206), and one or more filters to generate RF signals for subsequent transmission (e.g., by one or more of the one or more antennas 210).

In some aspects, the PMC 212may manage power provided to the baseband circuitry 204. The PMC 212 may control power-source selection, voltage scaling, battery charging, and/or DC-to-DC conversion. The PMC 212may, in some aspects, be included when the device 200 is capable of being powered by a battery, for example, when the device is included in a UE. The PMC 212may increase the power conversion efficiency while providing beneficial implementation size and heat dissipation characteristics.

FIG. 2 shows the PMC 212 coupled with the baseband circuitry 204. In other aspects, the PMC 212 may be additionally or alternatively coupled with, and perform similar power management operations for, other components such as, but not limited to, application circuitry 202, RF circuitry 206, or FEM 208.

In some aspects, the PMC 212 may control, or otherwise be part of, various power saving mechanisms of the device 200. For example, if the device 200 is in an RRC Connected state, in which it is still connected to the RAN node as it expects to receive traffic shortly, then it may enter a state known as Discontinuous Reception Mode (DRX) after a period of inactivity. During this state, the device 200 may power down for brief intervals of time and thus save power.

According to some aspects, if there is no data traffic activity for an extended period of time, then the device 200 may transition off to an RRC Idle state, in which it disconnects from the network and does not perform operations such as channel quality feedback, handover, etc. The device 200 goes into a very low power state and it performs paging during which it periodically wakes up to listen to the network and then powers down again. The device 200 may transition back to RRC_Connected state to receive data.

An additional power saving mode may allow a device to be unavailable to the network for periods longer than a paging interval (ranging from seconds to a few hours). During this time, the device 200 in some aspects may be unreachable to the network and may power down. Any data sent during this time incurs a delay, which may be large, and it is assumed the delay is acceptable.

Processors of the application circuitry 202 and processors of the baseband circuitry 204 may be used to execute elements of one or more instances of a protocol stack. For example, processors of the baseband circuitry 204, alone or in combination, may be used execute Layer 3, Layer 2, or Layer 1 functionality, while processors of the application circuitry 204 may utilize data (e.g., packet data) received from these layers and further execute Layer 4 functionality (e.g., transmission communication protocol (TCP) and user datagram protocol (UDP) layers). As referred to herein, Layer 3 may comprise a radio resource control (RRC) layer, described in further detail below. As referred to herein, Layer 2 may comprise a medium access control (MAC) layer, a radio link control (RLC) layer, and a packet data convergence protocol (PDCP) layer, described in further detail below. As referred to herein, Layer 1 may comprise a physical (PHY) layer of a UE/RAN node, described in further detail below.

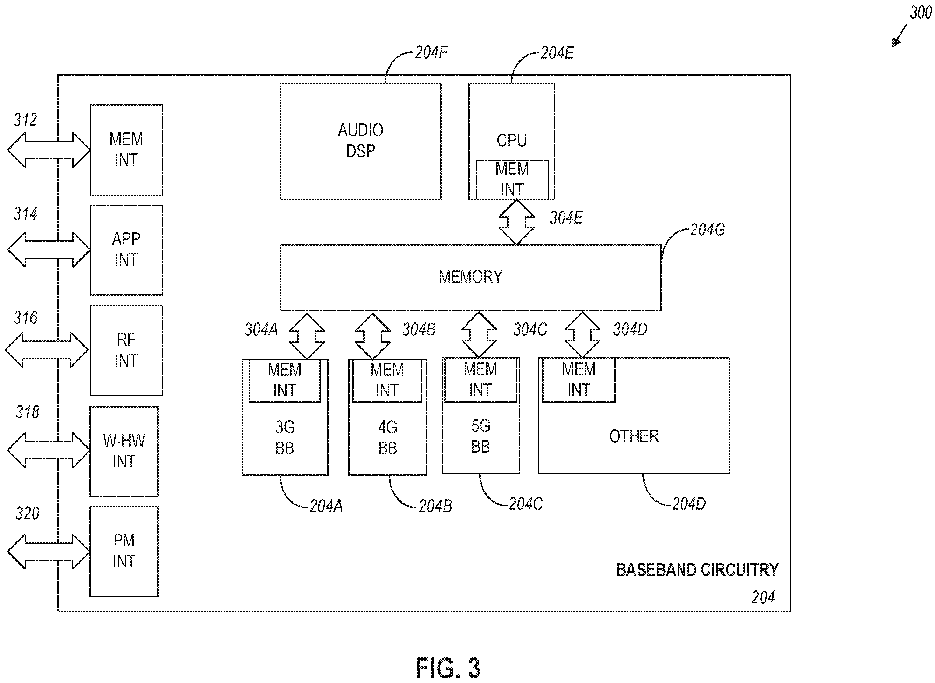

FIG. 3 illustrates example interfaces of baseband circuitry in accordance with some aspects. As discussed above, the baseband circuitry 204 of FIG. 2 may comprise processors 204A-204E and a memory 204G utilized by said processors. Each of the processors 204A-204E may include a memory interface, 304A-304E, respectively, to send/receive data to/from the memory 204G.

The baseband circuitry 204 may further include one or more interfaces to communicatively couple to other circuitries/devices, such as a memory interface 312 (e.g., an interface to send/receive data to/from memory external to the baseband circuitry 204), an application circuitry interface 314 (e.g., an interface to send/receive data to/from the application circuitry 202 of FIG. 2), an RF circuitry interface 316 (e.g., an interface to send/receive data to/from RF circuitry 206 of FIG. 2), a wireless hardware connectivity interface 318 (e.g., an interface to send/receive data to/from Near Field Communication (NFC) components, Bluetooth^{®} components (e.g., Bluetooth^{®} Low Energy), Wi-Fi^{®} components, and other communication components), and a power management interface 320 (e.g., an interface to send/receive power or control signals to/from the PMC 212).

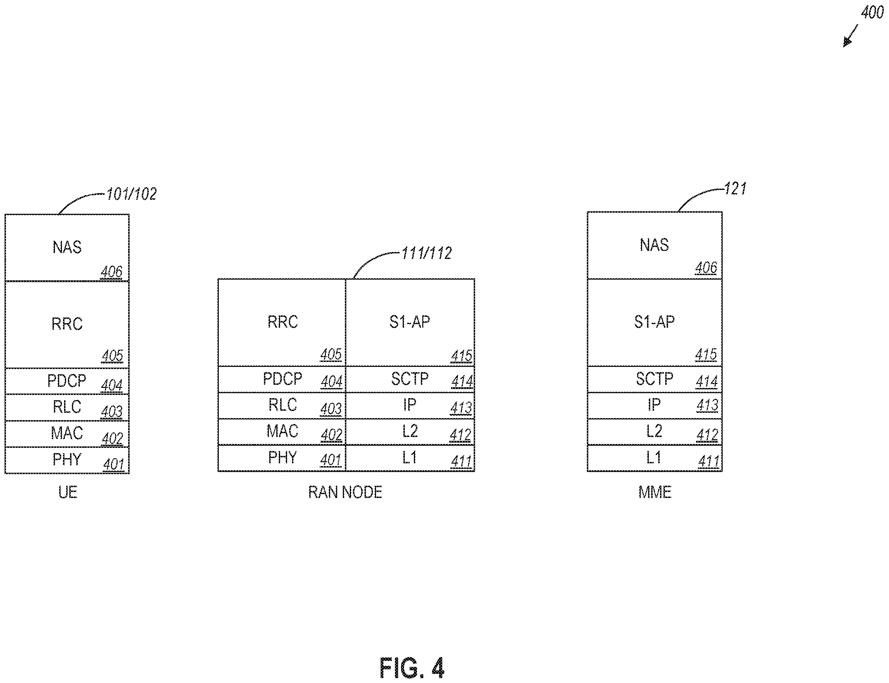

FIG. 4 is an illustration of a control plane protocol stack in accordance with some aspects. In one aspect, a control plane 400 is shown as a communications protocol stack between the UE 101 (or alternatively, the UE 102), the RAN node 111 (or alternatively, the RAN node 112), and the MME 121.

The PHY layer 401 may in some aspects transmit or receive information used by the MAC layer 402 over one or more air interfaces. The PHY layer 401 may further perform link adaptation or adaptive modulation and coding (AMC), power control, cell search (e.g., for initial synchronization and handover purposes), and other measurements used by higher layers, such as the RRC layer 405. The PHY layer 401 may in some aspects still further perform error detection on the transport channels, forward error correction (FEC) coding/decoding of the transport channels, modulation/demodulation of physical channels, interleaving, rate matching, mapping onto physical channels, and Multiple Input Multiple Output (MIMO) antenna processing.

The MAC layer 402 may in some aspects perform mapping between logical channels and transport channels, multiplexing of MAC service data units (SDUs) from one or more logical channels onto transport blocks (TB) to be delivered to PHY via transport channels, de-multiplexing MAC SDUs to one or more logical channels from transport blocks (TB) delivered from the PHY via transport channels, multiplexing MAC SDUs onto TBs, scheduling information reporting, error correction through hybrid automatic repeat request (HARQ), and logical channel prioritization.

The RLC layer 403 may in some aspects operate in a plurality of modes of operation, including: Transparent Mode (TM), Unacknowledged Mode (UM), and Acknowledged Mode (AM). The RLC layer 403 may execute transfer of upper layer protocol data units (PDUs), error correction through automatic repeat request (ARQ) for AM data transfers, and concatenation, segmentation and reassembly of RLC SDUs for I-jM and AM data transfers. The RLC layer 403 may also in some aspects execute re-segmentation of RLC data PDUs for AM data transfers, reorder RLC data PDUs for UM and AM data transfers, detect duplicate data for UM and AM data transfers, discard RLC SDUs for UM and AM data transfers, detect protocol errors for AM data transfers, and perform RLC re-establishment.

The PDCP layer 404 may in some aspects execute header compression and decompression of IP data, maintain PDCP Sequence Numbers (SNs), perform in-sequence delivery of upper layer PDUs at re-establishment of lower layers, eliminate duplicates of lower layer SDUs at re-establishment of lower layers for radio bearers mapped on RLC AM, cipher and decipher control plane data, perform integrity protection and integrity verification of control plane data, control timer-based discard of data, and perform security operations (e.g., ciphering, deciphering, integrity protection, integrity verification, etc.).

In some aspects, primary services and functions of the RRC layer 405 may include broadcast of system information (e.g., included in Master Information Blocks (MIBs) or System Information Blocks (SIBs) related to the non-access stratum (NAS)), broadcast of system information related to the access stratum (AS), paging, establishment, maintenance and release of an RRC connection between the UE and E-UTRAN (e.g., RRC connection paging, RRC connection establishment, RRC connection modification, and RRC connection release), establishment, configuration, maintenance and release of point to point Radio Bearers, security functions including key management, inter radio access technology (RAT) mobility, and measurement configuration for UE measurement reporting. Said MIBs and SIBs may comprise one or more information elements (IEs), which may each comprise individual data fields or data structures.

The UE 101 and the RAN node 111 may utilize a Uu interface (e.g., an LTE-Uu interface) to exchange control plane data via a protocol stack comprising the PHY layer 401, the MAC layer 402, the RLC layer 403, the PDCP layer 404, and the RRC layer 405.

The non-access stratum (NAS) protocols 406 form the highest stratum of the control plane between the UE 101 and the MME 121 as illustrated in FIG. 4. In aspects, the NAS protocols 406 support the mobility of the UE 101 and the session management procedures to establish and maintain IP connectivity between the UE 101 and the P-GW 123.

The S1 Application Protocol (S1 -AP) layer 415 may support the functions of the S1 interface and comprise Elementary Procedures (EPs) An EP is a unit of interaction between the RAN node 111 and the CN 120. In certain aspects, the S1-AP layer services may comprise two groups: UE-associated services and non UE-associated services. These services perform functions including, but not limited to: E-UTRAN Radio Access Bearer (E-RAB) management, UE capability indication, mobility, NAS signaling transport, RAN Information Management (RIM), and configuration transfer.

The Stream Control Transmission Protocol (SCTP) layer (which may alternatively be referred to as the SCTP/IP layer) 414 may ensure reliable delivery of signaling messages between the RAN node 111 and the MME 121 based, in part, on the IP protocol, supported by the IP layer 413. The L2 layer 412 and the L1 layer 411 may refer to communication links (e.g., wired or wireless) used by the RAN node and the MME to exchange information.

The RAN node 111 and the MME 121 may utilize an S1-MME interface to exchange control plane data via a protocol stack comprising the L1 layer 411, the L2 layer 412, the IP layer 413, the SCTP layer 414, and the S1-AP layer 415.

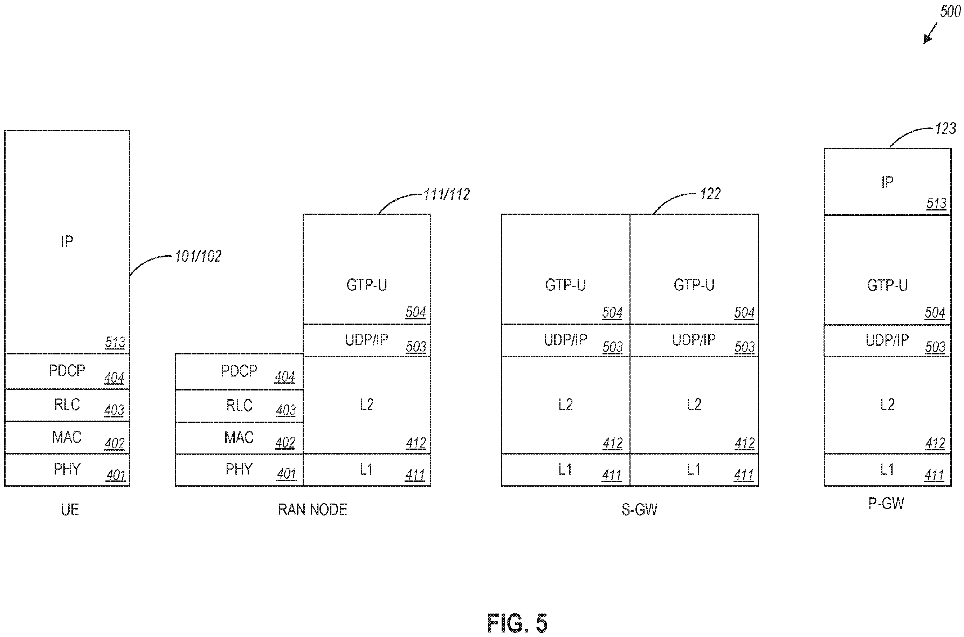

FIG. 5 is an illustration of a user plane protocol stack in accordance with some aspects. In this aspect, a user plane 500 is shown as a communications protocol stack between the UE 101 (or alternatively, the UE 102), the RAN node 111 (or alternatively, the RAN node 112), the S-GW 122, and the P-GW 123. The user plane 500 may utilize at least some of the same protocol layers as the control plane 400. For example, the UE 101 and the RAN node 111 may utilize a Uu interface (e.g., an LTE-Uu interface) to exchange user plane data via a protocol stack comprising the PHY layer 401, the MAC layer 402, the RLC layer 403, and the PDCP layer 404.

The General Packet Radio Service (GPRS) Tunneling Protocol for the user plane (GTP-U) layer 504 may be used for carrying user data within the GPRS core network and between the radio access network and the core network. The user data transported can be packets in IPv4, IPv6, or PPP formats, for example. The UDP and IP security (UDP/IP) layer 503 may provide checksums for data integrity, port numbers for addressing different functions at the source and destination, and encryption and authentication on the selected data flows. The RAN node 111 and the S-GW 122 may utilize an S1-U interface to exchange user plane data via a protocol stack comprising the L1 layer 411, the L2 layer 412, the UDP/IP layer 503, and the GTP-U layer 504. The S-GW 122 and the P-GW 123 may utilize an S5/S8a interface to exchange user plane data via a protocol stack comprising the L1 layer 411, the L2 layer 412, the UDP/IP layer 503, and the GTP-U layer 504. As discussed above with respect to FIG. 4, NAS protocols support the mobility of the UE 101 and the session management procedures to establish and maintain IP connectivity between the UE 101 and the P-GW 123.

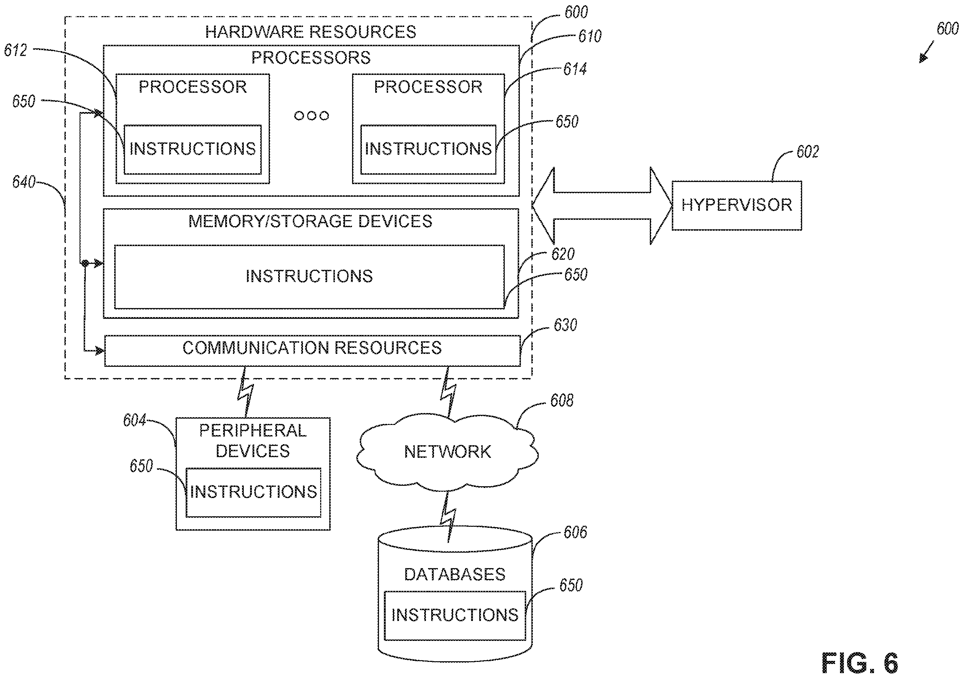

FIG. 6 is a block diagram illustrating components, according to some example aspects, able to read instructions from a machine-readable or computer-readable medium (e.g., a non-transitory machine-readable storage medium) and perform any one or more of the methodologies discussed herein. Specifically, FIG. 6 shows a diagrammatic representation of hardware resources 600 including one or more processors (or processor cores) 610, one or more memory/storage devices 620, and one or more communication resources 630, each of which may be communicatively coupled via a bus 640. For aspects in which node virtualization (e.g., NFV) is utilized, a hypervisor 602 may be executed to provide an execution environment for one or more network slices and/or sub-slices to utilize the hardware resources 600

The processors 610 (e.g., a central processing unit (CPU), a reduced instruction set computing (RISC) processor, a complex instruction set computing (CISC) processor, a graphics processing unit (GPU), a digital signal processor (DSP) such as a baseband processor, an application specific integrated circuit (ASIC), a radio-frequency integrated circuit (RFIC), another processor, or any suitable combination thereof) may include, for example, a processor 612 and a processor 614.

The memory/storage devices 620 may include main memory, disk storage, or any suitable combination thereof. The memory/storage devices 620 may include, but are not limited to any type of volatile or non-volatile memory such as dynamic random access memory (DRAM), static random-access memory (SRAM), erasable programmable read-only memory (EPROM), electrically erasable programmable read-only memory (EEPROM), Flash memory, solid-state storage, etc.

The communication resources 630 may include interconnection or network interface components or other suitable devices to communicate with one or more peripheral devices 604 or one or more databases 606 via a network 608. For example, the communication resources 630 may include wired communication components (e.g., for coupling via a Universal Serial Bus (USB)), cellular communication components, NFC components, Bluetooth^{®} components (e.g., Bluetooth^{®} Low Energy), Wi-Fi^{®} components, and other communication components.

Instructions 650 may comprise software, a program, an application, an applet, an app, or other executable code for causing at least any of the processors 610 to perform any one or more of the methodologies discussed herein. The instructions 650 may reside, completely or partially, within at least one of the processors 610 (e.g., within the processors cache memory), the memory/storage devices 620, or any suitable combination thereof. Furthermore, any portion of the instructions 650 may be transferred to the hardware resources 600 from any combination of the peripheral devices 604 or the databases 606. Accordingly, the memory of processors 610, the memory/storage devices 620, the peripheral devices 604, and the databases 606 are examples of computer-readable and machine-readable media.

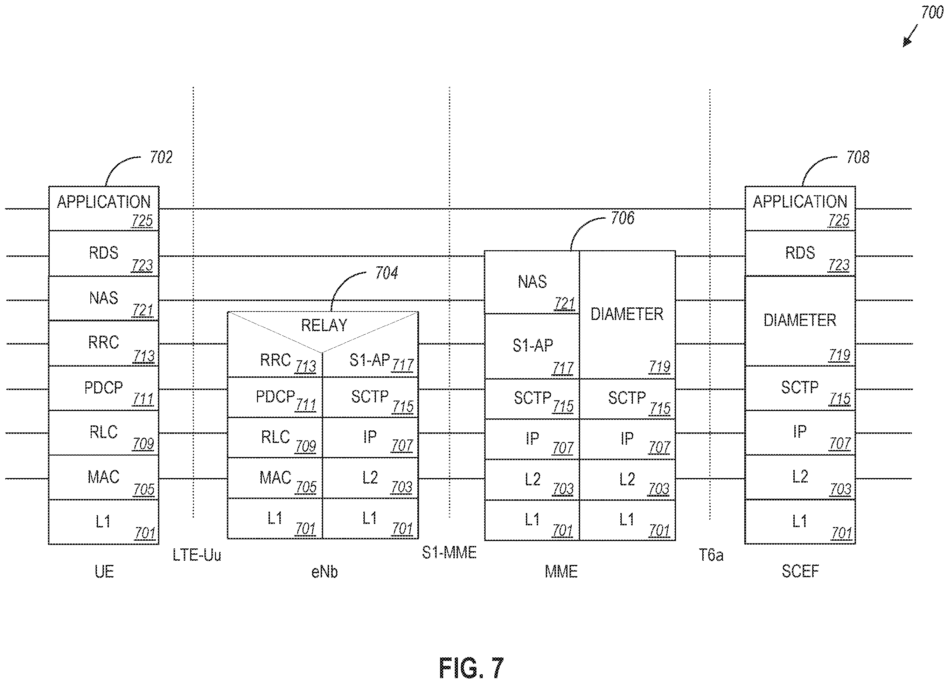

FIG. 7 illustrates protocol layering for a reliable data transfer between UE and SCEF, in accordance with some aspects. Referring to FIG. 7, there is illustrated protocol layering 700 for a reliable data service (RDS) protocol associated with communications between the UE 702 and the SCEF 708. In some aspects, the RDS protocol can support peer-to-peer data transfers, providing reliable data delivery between the UE and the SCEF. The data is transferred via a PDN connection between the UE and the SCEF. In some aspects, a UE can connect to multiple SCEFs, and the RDS protocol can support multiple applications on the UE to simultaneously conduct data transfers with their peer entities on the SCEF using a single PDN connection between the UE and the SCEF. In some aspects, the RDS protocol can be configured to support both acknowledged and unacknowledged data transfers. In some aspects, the RDS protocol can be configured to support variable-length frames and shall allow detection and elimination of duplicate frames at the receiving endpoint.

As illustrated in FIG. 7, the protocol stack for the UE 702 can include the following components: L1 layer 701, MAC layer 705, RLC layer 709, PDCP layer 711, RRC layer 713, NAS layer 721, RDS layer 723, and application layer 725. The protocol stack for the eNB 704 can include L1 layers 701, an L2 layer 703, a MAC layer 705, an IP layer 707, an RLC layer 709, a PDCP layer 711, and SCTP layer 715, an RRC layer 713, and S1-AP layer 717.

The protocol stack for the MME 706 can include L1 layers 701, L2 layers 703, IP layers 707, SCTP layers 715, an S1-AP layer 717, a diameter layer 719, and a NAS layer 721.

The protocol stack for the SCEF 708 can include an L1 layer 701, an L2 layer 703, an IP layer 707, an SCTP layer 715, a diameter layer 719, an RDS layer 723, and an application layer 725. As illustrated in FIG. 7, in some aspects, the RDS protocol layer 723 operates above the NAS layers 721 and the diameter layers 719. In other aspects, the RDS protocol layer, which can be used to add reliability in data communication/exchange (e.g., by adding acknowledgements) can be used on top of other protocol layers and in different configuration from the layer configuration illustrated in FIG. 7.

In some aspects, the RDS protocol can be used to establish a peer-to-peer logical link between the UE and the SCEF. The logical link can be identified by a pair of port number and an EPS bearer ID. Each port number can be used to identify an application on the UE side or the SCEF side, and can be included in a field (e.g., the address field) of one or more RDS frames.

In some aspects, the source port number identifies the application running on the originator device (e.g., the UE), and the destination port number identifies the application running on the receiver device (e.g., the SCEF).

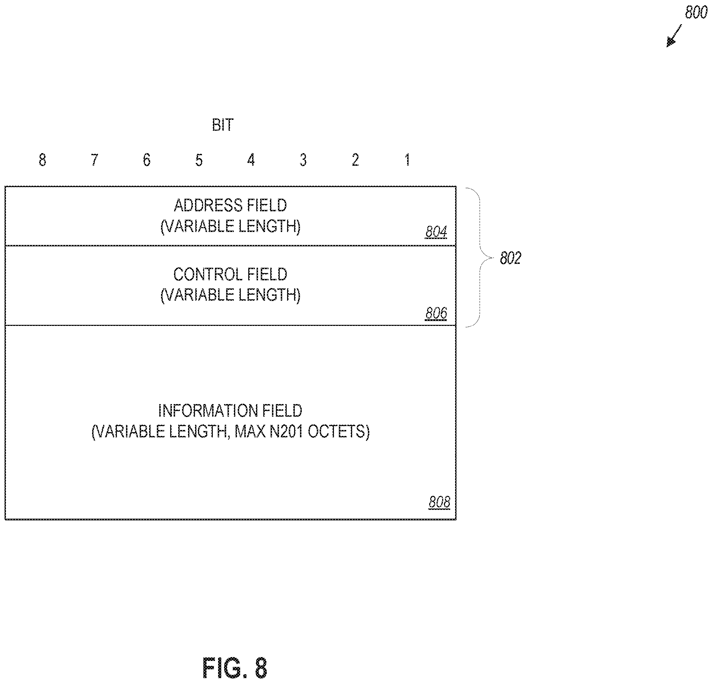

In some aspects, an RDS frame can include a header (e.g., 802 in FIG. 8) and an information field (e.g. 808 in FIG. 8) of variable length. The header can include information about port numbers and the frame number that is used to identify the frame and provide reliable transmission. The information field can include the payload to be transferred between the UE and the SCEF.

In some aspects, the UE can be configured to establish a PDN connection with the SCEF either during an Attach procedure or through UE-requested PDN connectivity procedure. The UE can be configured to use the EPS bearer ID to select the bearers to transfer RDS PDUs to the SCEF. The EPS bearer ID can be used to identify the destination (at the UE or at the SCEF). In some aspects, the EPS bearer ID can be omitted from an RDS frame and can be included in a NAS ESM message header. For example, the EPS bearer ID can be included as part of an ESM data transport message used for sending data over the control plane.

In some aspects, the RDS protocol can be configured to support multiple UEs at the LTE-Uu interface and multiple applications within the UE. The RDS protocol can be configured to provide functionality for flow control and sequence control to maintain the sequential order of frames across the logical link.

In some aspects, the RDS protocol can be used for acknowledged as well as unacknowledged data transfer and communication between the UE and the SCEF. In some aspects, during acknowledged operation, the information can be transmitted in order in numbered Information (I) frames. The I frames can be acknowledged at the RDS layer. In some aspects, error recovery and reordering mechanisms based on retransmission of acknowledged I frames can be provided by the RDS protocol. For example, several I frames can be acknowledged at the same time In some aspects, flow control can be implemented via a sliding window mechanism. The procedure for establishment of acknowledged transfer is described herein below.

In some aspects, during unacknowledged operation, the information can be transmitted in numbered Unconfirmed Information (UI) frames. In some aspects, the UI frames are not acknowledged at the RDS layer. In some aspects, error recovery and reordering mechanisms can be undefined for UI frame communication. In some aspects, duplicate UI frames can be discarded.

As used herein, the terms originating device and originator refer to a device initiating communication and sending data. As used herein, the terms receiver and receiving device refer to a device receiving data sent from originating device or an originator.

FIG. 8 illustrates an example reliable data service (RDS) frame format, in accordance with some aspects. Referring to FIG. 8, there is illustrated an example RDS frame 800 which can be used during RDS communications. The frame 800 can include a header 802 formed by an address field 804 and a control field 806. The frame 800 can further include an information field 808. In some aspects, the address and control fields can be between two and six octets. In some aspects, the information field can be a maximum of N201 octets long, where N201 can be set by higher layer signaling and in some cases can be 1520 octets.

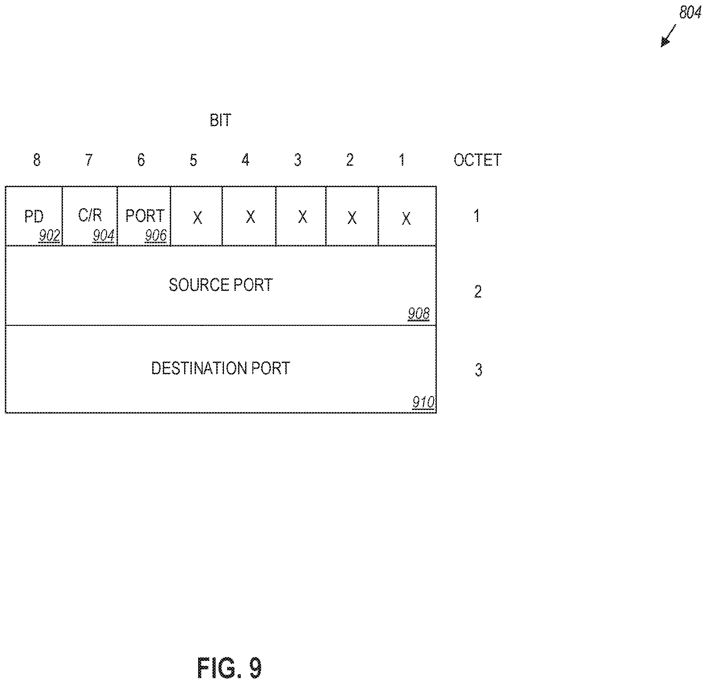

FIG. 9 illustrates a format of an address field of an RDS frame, in accordance with some aspects. Referring to FIG. 9, there is illustrated a more detailed diagram of the address field 804. The address field 804 includes one or three octets. The second and third octets (including the source port 908 and the destination port 910) are included in instances when the Port bit 906 in the first octet is set (e.g., the bit is set to 1). The address field 804 includes the source port 908, which can be used to identify the source application running on the originator device, which is transmitting the frame, and the destination port 910 identifies the desination application running on the receiver device for which the frame is intended. The address field 804 can include a protocol discriminator (PD) bit 902, a command and response (C/R) bit 904, a port bit 906, source port 908, destination port 910, and spare bits (X).

The PD bit 902 can be configured to indicate whether a frame is an RDS frame or belongs to a different protocol. In some aspects, RDS frames can have the PD bit set to 0. In aspects when a frame with the PD bit set to 1 is received, then such frame can be treated as an invalid frame.

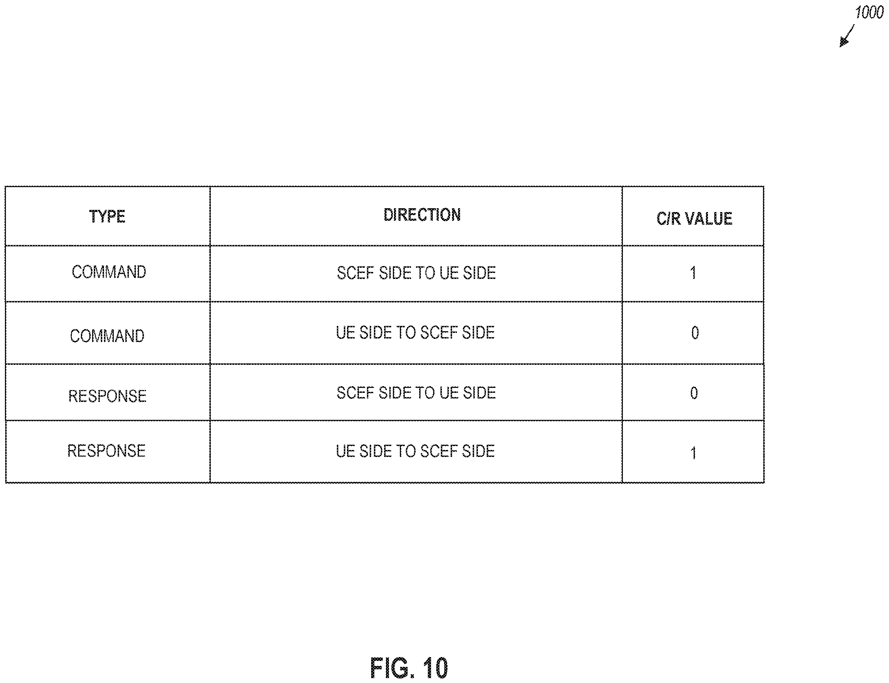

FIG. 10 illustrates a Command/Response (C/R) field bit usage, in accordance with some aspects. The C/R bit 904 can be configured to identify a frame as either a command or a response frame. The UE side can be configured to send commands with the C/R bit set to 0, and responses with the C/R bit set to 1. In some aspects, the SCEF side can perform the opposite functionalities, i.e., commands are sent with C/R set to 1 and responses are sent with C/R set to 0. The combinations for the SCEF side and UE side are illustrated in table 1000 in FIG. 10.

The port bit 906 can be configured to indicate whether the source port 908 and the destination port 910 are included in the address field 804. For example, the source port and the destination port are included in the address field 804 when the port bit 906 in the first octet is set to one.

In some aspects, the source and destination port numbers can indicate logical ports which can be used to enable multiple applications on the UE side to simultaneously communicate with their peer entities on the SCEF side using the same PDN connection. In aspects when a UE application starts to use the PDN connection to transmit RDS frames, the UE and the SCEF can be configured to establish which source port number will be used for the application on the UE side for mobile-originated (MO) traffic and which destination port number will be used for the application intended to receive the frames on the SCEF side. Similarly for mobile-terminated (MT) traffic when an application in the network starts to use the PDN connection to transmit RDS frames to the UE, the UE and the SCEF can be configured to establish which source port number will be used for the application on the SCEF side and which destination port number will be used for the application intended to receive the frames on the UE side. In some aspects, the source port can be included in the address field 804 when the port bit 906 is set. In some aspects, the source port 908 can have values from 1 to 255.

In some aspects, be destination port 910 can be used to identify the destination application on the receiver that is receiving the RDS frame. The destination port 910 can be included in the address field 804 when the port bit 906 is set. In some aspects, the destination port 910 can have values from 1 to 255.

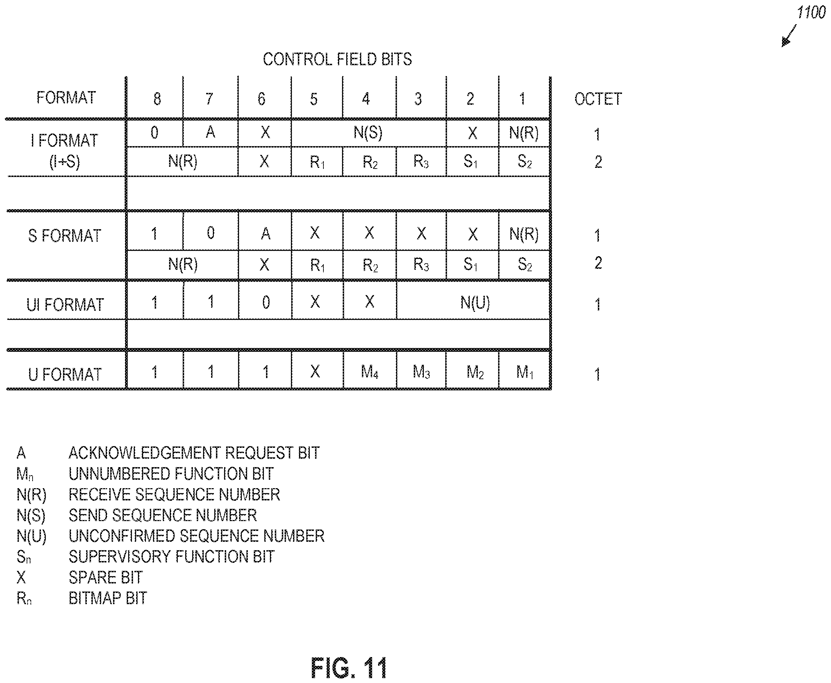

FIG. 11 illustrates a format of a control field of an RDS frame, in accordance with some aspects. The control field 1100 can be configured to identify the type of frame and can include one or two octets. The following types of control field formats can be used: a confirmed information transfer frame format (I format); a supervisory functions frame format (S format); unconfirmed information transfer frame format (UI format); and control functions frame format (U format).

In some aspects, the I format frames can be used to perform an information transfer between peer entities with acknowledgement. In some aspects, an I frame can include a send sequence number N(S), a receive sequence number N(R), and an acknowledgement request bit A, that may be set to 0 or 1. The use ofN(S), N(R), and A is defined in greater detail herein below.

In some aspects, the 1 frame can also include supervisory information, in effect "piggy-backing" an S frame with each I frame, so that it may be considered to be an I+S frame.

In some aspects, the S format frame can be used to perform supervisory control functions such as acknowledge I frames. The supervisory frame can include supervisory function bits S(n) that are used for encoding commands and responses which perform the supervisory control functions. Each supervisory frame can also include a receive sequence number N(R) and an acknowledgement request bit A, that may be set to 0 or 1. In some aspects when acknowledged operation is used, all I+S and S frames can include R(n), the Selective Acknowledgement bitmap. The commands and responses as well as the use of S(n), N(R), A and R(n) are defined herein below.

In some aspects, the UI format frame can be used to perform an information transfer between peer entities without acknowledgement. In some aspects, no verification of sequence numbers can be performed for UI frames.

In some aspects, the U format frame can be used to provide additional link control functions. The U frame can include Unnumbered function bits M(n) that are used to encode link control commands and response. In some aspects, the U format frame contains no sequence number. The commands and responses as well as the use of M(n) are defined herein below.

The various parameters associated with the control field formats are described herein below. In some aspects, I and S frames can include the Acknowledgement Request (A) bit. The A bit set to 1 can be used to solicit an acknowledgement (i.e., an I+S or S frame) from the receiver. The A bit set to 0 can be used to indicate that the receiver is not requested to send an acknowledgement.

In some aspects when acknowledged operation is used, the originating device can include an associated send state variable V(S) when using I frames. The send state variable V(S) can be used to denote the sequence number of the next in-sequence I frame to be transmitted. The send state variable V(S) can take on the value 0 through (MAX SEQUENCE NUMBER -1). In some aspects, the value of V(S) can be incremented by 1 with each successive I frame transmission, and can be limited so that it does not exceed acknowledge state variable V(A) by more than, e.g., the maximum number of outstanding (i.e., unacknowledged) I frames k. In some aspects, the value of k may be in the range of 1 ≤ k ≤ (MAX SEQUENCE NUMBER/2 -1). In some aspects, V(S) can be not incremented when an I frame is retransmitted.

In some aspects when acknowledged operation is used, each peer originator can have an associated acknowledge state variable V(A) when using I frame and supervisory frame commands and responses. The acknowledge state variable V(A) can be configured to identify the first I frame in the transmit window, so that V(A) - 1 equals N(S) of the last in-sequence acknowledged I frame. In some aspects, the acknowledge state variable V(A) can take on the value 0 through (MAX SEQUENCE NUMBER -1). In some aspects, the value of V(A) can be updated by the valid N(R) values received from its peer. In some aspects, a valid N(R) value can be in the range V(A) ≤ N(R) ≤ V(S).

In some aspects when acknowledged operation is used, I frames can include N(S), the send sequence number of transmitted I frames. At the time that an in-sequence I frame is designated for transmission, the value of N(S) can be set equal to the value of the send state variable V(S).

In some aspects when acknowledged operation is used, each receiver can have an associated receive state variable V(R) when using I frame and supervisory frame commands and responses. The receive state variable V(R) can be used to denote the sequence number of the next in-sequence I frame expected to be received. In some aspects, the receive state variable V(R) can take on the value 0 through (MAX SEQUENCE NUMBER -1). In some aspects, the value of V(R) can be incremented by one with the receipt of an error-free, in-sequence I frame whose send sequence number N(S) equals V(R).

In some aspects when acknowledged operation is used, I frames and supervisory frames can include N(R), the expected send sequence number of the next in-sequence received I frame. At the time that a frame of the above types is designated for transmission, the value of N(R) can be set equal to the value of the receive state variable V(R). In some aspects, the receive sequence number N(R) can indicate that the receiver transmitting the N(R) has correctly received all I frames numbered up to and including N(R) - 1.

In some aspects when acknowledged operation is used, I+S and S frames can include R(n), a selective acknowledgment (SACK) bitmap. In some aspects, at the time that a S frame is designated for transmission, the value of each bit R(n) in the bitmap can be set to 0 or 1 based on whether I frame number N(R) ⁺ n has been received or not. A condition of R(n) = 1 can indicate that the receiver transmitting the S frame has correctly received I frame number N(R) + n. A condition of R(n) = 0 can indicate that the receiver transmitting the S frame has not correctly received I frame number N(R) + n. In some aspects, the SACK bitmap can include 3 bits.

In some aspects, each originator can have an associated unconfirmed send state variable V(U) when using UI frame commands. In some aspects, V(U) can denote the sequence number of the next UI frame to be transmitted. In some aspects, V(U) can take on the value 0 through (MAX SEQUENCE NUMBER -1). In some aspects, the value of V(U) can be incremented by 1 with each successive UI frame transmission.

In some aspects, UI frames can include N(U), the unconfirmed sequence number of transmitted UI frames. In some aspects, at the time that a UI frame is designated for transmission, the value of N(U) can be set equal to the value of the unconfirmed send state variable V(U).

In some aspects, a receiver shall have an associated unconfirmed receive state variable V(UR) when using UI frame commands. V(UR) can denote the sequence number of the next in-sequence UI frame expected to be received. In some aspects, V(UR) can take on the value 0 through (MAX SEQUENCE NUMBER -1).

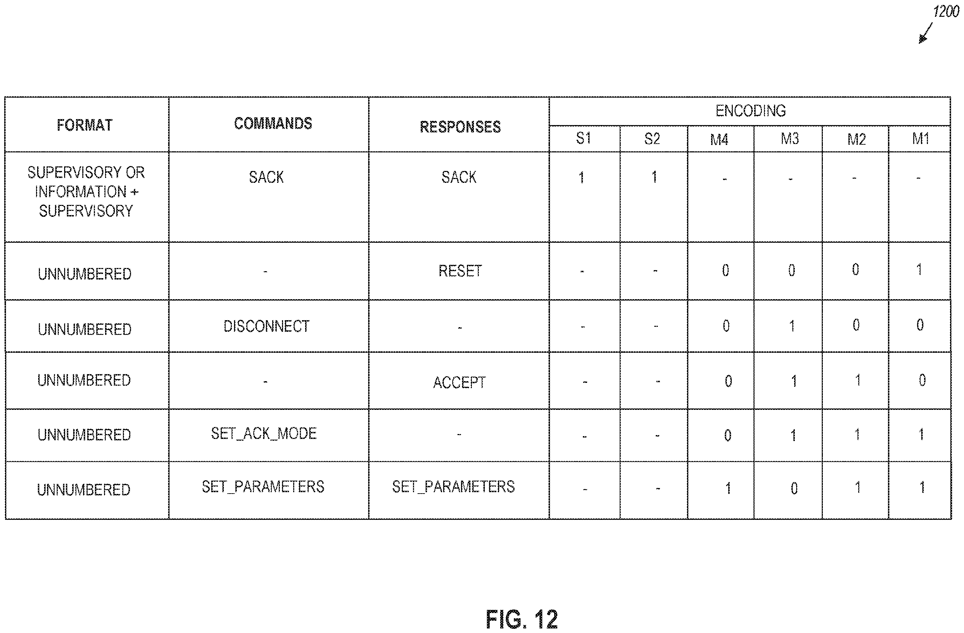

FIG. 12 illustrates a table with example RDS commands and responses, in accordance with some aspects. Referring to FIG. 12, table 1200 illustrates various commands and responses (including encoding information) used by the UE side and the SCEF side. In some aspects, each link connection can be configured to support the appropriate set of commands and responses for the type of operation desired.

The following unnumbered (U) frame commands can be used during RDS communications - Set-Acknowledgement-Mode command (SET_ACK_MODE), a Disconnect command (DISCONNECT), an accept response command (ACCEPT), a reset response command (RESET), and set parameters command/response (SET PARAMETERS).

In some aspects, the originator can be configured to use the SET ACK MODE unnumbered command to place the UE or SCEF side into acknowledged operation. In some aspects, the receiver can be configured to confirm acceptance of a SET_ACK_MODE command by the transmission (e.g., at the first opportunity) of an ACCEPT response. Upon acceptance of SET_ACK_MODE command, the send state variable V(S), acknowledge state variable V(A), and receive state variable V(R), can be set to 0. In some aspects, the transmission of a SET_ACK_MODE command can indicate the clearance of any exception conditions. In some aspects, previously transmitted I frames that are unacknowledged when this command is sent can be discarded. In some aspects, higher layers can initiate recovery from the possible loss of the contents of such I frames.

In some aspects, the DISCONNECT unnumbered command can be transmitted in order to terminate the acknowledged operation. In some aspects, no information field can be used in connection with the DISCONNECT command. Prior to executing the command, the receiver side receiving the DISCONNECT command can be configured to confirm the acceptance of a DISCONNECT command by the transmission of an ACCEPT response. The originator that sends the DISCONNECT command can be configured to terminate the acknowledge mode operation when it receives the ACCEPT or RESET response. In some aspects, previously transmitted I frames that are unacknowledged when this command is executed can remain unacknowledged and can be discarded. In some aspects, higher layers can initiate recovery from the possible loss of the contents of such I frames.

In some aspects, the ACCEPT unnumbered response can be used by the receiver to acknowledge the receipt and acceptance of the SET_ACK_MODE or DISCONNECT commands. In some aspects, the SET ACK MODE or DISCONNECT commands can be not actioned upon until the ACCEPT response is transmitted.

In some aspects, the RESET unnumbered response can be used by the receiver to report to the originator that the receiver is in a state such that acknowledged operation cannot be performed. The receiver can be configured to transmit a RESET response to one or more valid commands received that it cannot action upon. In some aspects, no information field can be used in connection with the RESET response.

In some aspects, the SET_PARAMETERS command/response can be used to set and exchange values of parameters between originator and receiver. These parameters may include items such as the version of RDS as well as other information as discussed herein below.

In some aspects, the unconfirmed information (UI) command can be used to perform unacknowledged information transfer. In some aspects, no verification of sequence numbers is performed for UI frames. In this regard, the UI frame may be lost without notification if an error occurs during transmission of the command.

In reference to combined Information (I) and Supervisory (S) frames, the function of the information (I) frame can include transferring of sequentially-numbered frames containing information fields provided by upper layers. In some aspects, this frame can be used exclusively for an acknowledge operation.

In some aspects, numbered I frames can be configured to carry supervisory information, and are for this reason also called I+S frames. A separate S frame can be communicated when there is no information field to be transferred. Whether an I+S or S frame is transmitted as a command or as a response is non-consequential for the acknowledge operation.

The Selective Acknowledgement (SACK) command / response is a supervisory frame which can be used by a receiver to acknowledge a single or multiple I frames. Frames up to and including N(R) - 1, and frames indicated by the SACK bitmap, can be deemed to have been received correctly. In addition to indicating the status of received I frames, the SACK frame with the A bit set to 1 may be used by the originator to request an acknowledgement from receiver.

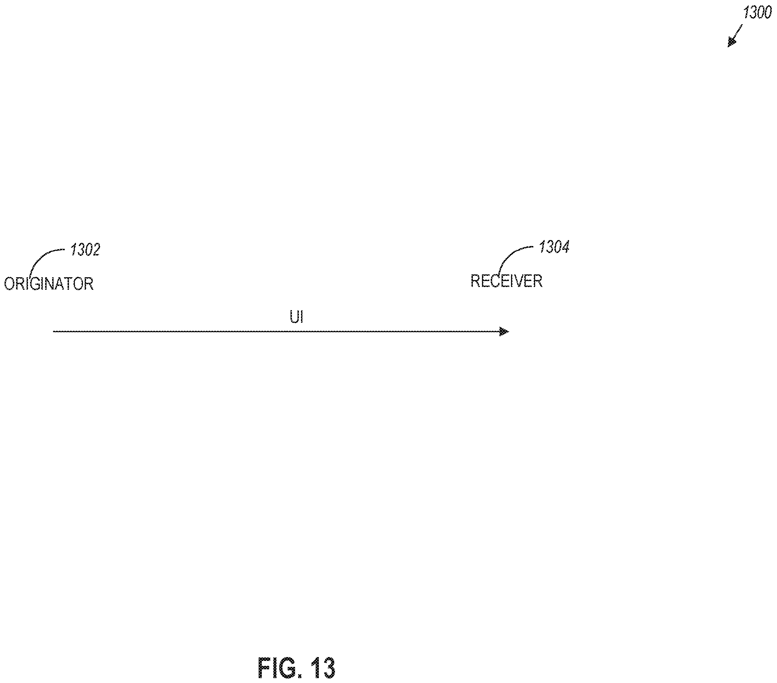

Information provided herein (e.g., in connection with FIG. 13 - FIG. 18) describes the RDS protocol procedures between the UE and SCEF for unacknowledged and acknowledged data service.

In some aspects, the following RDS protocol procedures can be used: unacknowledged information transfer; establishment of acknowledged operation; acknowledged information transfer; and termination of acknowledged operation.

FIG. 13 illustrates an example unacknowledged information transfer procedure 1300 between originator 1302 and a receiver 1304, in accordance with some aspects. The purpose of the unacknowledged information transfer procedure is for the originator 1302 to perform unacknowledged transmission of information to the receiver 1304. In some aspects, no error recovery mechanisms are used in connection with unacknowledged operation.

In some aspects, the originator 1302 can be configured to initiate the unacknowledged information transfer procedure when information from upper layers is to be transmitted using unacknowledged operation. The originator 1302 and the receiver 1304 can negotiate the use of source and destination port numbers before initiating unacknowledged information transfer.

In some aspects, the originator 1302 can be configured to initiate the unacknowledged information transfer procedure by transmitting a UI command frame to the receiver 1304. The originator 1302 can be configured to set the Source Port in the Address field to the port number of the source application on the originator, and the Destination Port in the Address field to the port number of the destination application on the receiver. The originator 1302 can be configured to set the unconfirmed sequence number N(U) in UI command frame to the value of unconfirmed send state variable V(U).

In some aspects, upon receiving a UI command frame, the receiver 1304 can be configured to pass the contents of the Information field to the appropriate upper layer corresponding to the Destination Port in the Address field. The receiver 1304 can be configured to set the unconfirmed receive state variable V(UR) to N(U) + 1.

Upon transmission of the UI command frame, the unacknowledged information transfer procedure can be considered completed by the originator 1302. In some aspects, upon receiving a UI command frame, if the Destination Port number is not in use by the receiver; or if N(U) of the received UI frame is in the range (V(UR) - k') ≤ N(U) ≤ V(UR) and if a UI frame with the same N(U) has already been received, then the UI frame can be discarded by the receiver 1304 without any further action. The value of k' may be in the range 1 < k' < MAX SEQUENCE NUMBER/2.

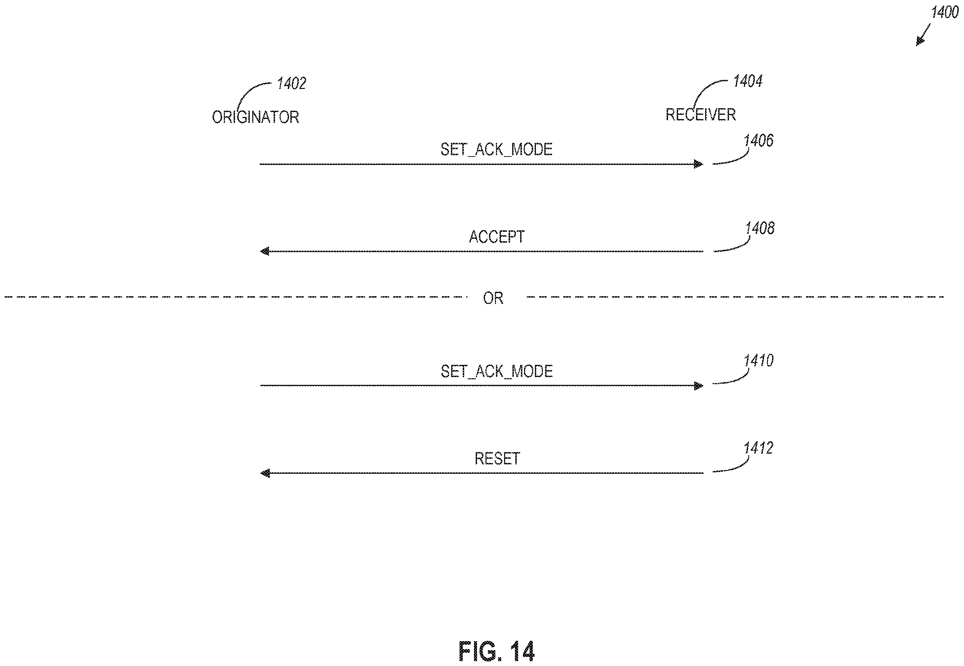

FIG. 14 illustrates establishment of an acknowledged information transfer procedure 1400 between an originator 1402 and a receiver 1404, in accordance with some aspects. In some aspects, the purpose of the establishment of the acknowledged transfer procedure 1400 is for the originator 1402 to establish an acknowledged transmission of information with the receiver 1404. In some aspects, frames other than U and UI frames received during the establishment of acknowledged transfer procedure can be ignored.

In some aspects, the originator 1402 can be configured to initiate the establishment of acknowledged transfer procedure when upper layers indicate information is to be transmitted using acknowledged operation. The originator 1402 and the receiver 1404 can be configured to identify the source and destination port numbers before initiating establishment of acknowledged transfer procedure.

The originator 1402 can be configured to initiate the establishment of acknowledged transfer procedure by transmitting (at operation 1406) a SET_ACK_MODE command to the receiver 1404. The originator 1402 can be configured to set the Source Port in the Address field to the port number of the source application on the originator, and the Destination Port in the Address field to the port number of the destination application on the receiver. The originator 1402 can be configured to clear one or more exception conditions, discard one or more queued I frames, reset the retransmission counter, and set the timer T200.

Upon receiving a SET_ACK_MODE command, the receiver 1404 can be configured to verify whether the Destination Port number contained in the Address field of SET_ACK_MODE command corresponds to an application on the receiver. In instances when the check is successful and if the application accepts to enter acknowledged transfer mode, the receiver 1404 shall send (at operation 1408) an ACCEPT response to the originator 1402. The receiver 1404 can be configured to set the Source Port in the Address field to the port number of the application on the receiver and the Destination Port in the Address field to the port number of the application on the originator 1402. The receiver 1404 can be configured to reset timer T200 if active, clear one or more exception conditions, and set V(S), V(R) and V(A) to 0.

Upon receipt of the ACCEPT response and if the Destination Port number contained in the Address field corresponds to the application which initiated the establishment of acknowledged transfer procedure, the originator 1402 can be configured to enter acknowledged mode transfer. In some aspects, the originator 1402 can be configured to reset timer T200 if active, clear one or more exception conditions, and set V(S), V(R) and V(A) to 0 and the establishment of acknowledged transfer procedure is successfully completed.

In some aspects, upon receiving a SET_ACK_MODE command (at operation 1410), if the Destination Port number contained in the Address field of SET_ACK_MODE command is not supported by the receiver or corresponds to an application that is not able to enter acknowledged transfer mode, then the receiver (at operation 1412) can be configured to send a RESET response to the originator.

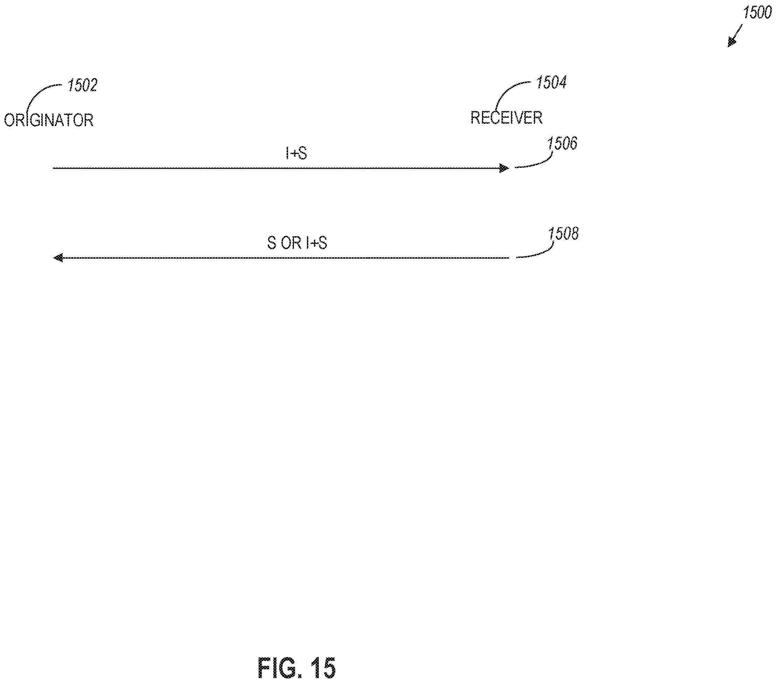

FIG. 15 illustrates an example acknowledged information transfer procedure 1500 between an originator 1502 and the receiver 1504, in accordance with some aspects. The acknowledged information transfer procedure 1500 can be used by the originator 1502 to transfer I frames to the receiver 1504, and receive acknowledgements for these frames from receiver 1504.

In some aspects, the originator 1502 can be configured to store the history of the transmitted I frames, and can be configured to remember the I-frame transmission sequence. The history can be used to decide which I frames to retransmit. In some aspects, due to retransmission, the history includes information sequences that may not be in order. A frame within the receive window can be received (i.e., the frame has been correctly received) or not received (i.e., the frame has not been correctly received). A frame within the transmit window can be not yet transmitted (i.e., the frame has not yet been transmitted); transmitted (i.e., the frame has been (re-) transmitted, but the originator does not know if the frame has been received by the receiver); acknowledged (i.e., the frame has been acknowledged by the receiver); or marked for retransmission (i.e., the originator has decided to retransmit this I frame). In some aspects, I frames can be transmitted in ascending N(S) order. In instances when I frames are retransmitted, the frame with the lowest N(S) can be retransmitted first (in this regard, the receiver can detect lost frames).

In some aspects, in instances when the originator 1502 has received information to be transmitted from upper layers, the information can be inserted in an I frame. The originator 1502 can be configured to set the Source Port in the Address field to the port number of the source application on the originator, and the Destination Port in the Address field to the port number of the destination application on the receiver. The control field parameters N(S) and N(R) can be assigned the values V(S) and V(R), respectively. The value V(S) can be incremented by 1 at the end of the transmission of the I frame. The originator 1502 can be configured to request an acknowledgement from the receiver by transmitting an I+S or S frame (e.g., at operation 1506) with the A bit set to 1. The originator 1502 may request an acknowledgement at any time. For example, an acknowledgement can be requested when the last I frame in a sequence of one or more I frames is transmitted, or when V(S) = V(A) + k as a result of the transmission of the I frame.

In some aspects, the originator 1502 can be configured to transmit a frame in the following order of priority:

In instances when there are any I frames marked for retransmission, then the originator 1502 can be configured to increment by 1 the retransmission count variable for the I frame with the lowest send sequence number N(S). In instances when the retransmission count variable exceeds the value of N200, then the originator 1502 can be configured to initiate the Establishment of acknowledged operation procedure. In instances when the retransmission count variable does not exceed the value of N200, then the originator 1502 can be configured to retransmit the I frame.

In instances when the originator 1502 has a new I frame to transmit, if V(S) ≤ V(A) + k (where k is the maximum number of outstanding I frames) then the new I frame can be transmitted.

In instances when the originator 1502 has an acknowledgement to transmit, then the originator can be configured to transmit an S frame.

When requesting an acknowledgement, the originator 1502 can be configured to set timer T201 and associate the timer with the I frame currently being transmitted, or, if the A bit is transmitted in an S frame, with the I frame last transmitted.

When the receiver receives a valid I frame whose N(S) is equal to the current V(R), the receiver 1504 can be configured to pass the contents of the Information field to the appropriate upper layer entity corresponding to the Destination Port in the Address field, increment its V(R) by 1, and respond with a SACK frame (e.g., at operation 1508), if the A bit of the received I frame was set to 1.

In some aspects, when the receiver 1504 receives a valid I frame whose N(S) is not in the range V(R) ≤ N(S) < V(R) + k, the receiver 1504 can be configured to discard the frame as a duplicate. In instances when the receiver receives a valid I frame where V(R) < N(S) < V(R) + k, then the receiver can be configured to store the I frame until all frames from V(R) to N(S) - 1 inclusive are correctly received. Once all the frames are correctly received, the receiver 1504 can be configured to pass the contents of the Information field to the appropriate upper layer entity corresponding to the Destination Port in the Address field, and set its V(R) = N(S) + 1.

In some aspects, in instances when the receiver 1504 detects an error in the sequence of received I frames, the receiver 1504 can be configured to transmit an I+S or S frame (e.g., at operation 1508). In instances when the receiver receives an I frame with a higher N(S) than the N(S) of the previously received I frame, and if there are I frames missing between these two N(S) values, then the receiver 1504 can be configured to consider that the missing I frames have been lost. In instances when the receiver receives an I frame with a lower N(S) than the N(S) of the previously received I frame, the receiver can be configured to consider that its peer originator has (re-) started retransmission due to the reception of an acknowledgement.

In some aspects, upon receipt of a valid I+S or S frame, the originator 1502 can be configured to, if N(R) is valid, treat the N(R) contained in the frame as an acknowledgement for all the I frames it has transmitted with an N(S) up to and including the received N(R) - 1. A valid N(R) value can be considered one that is in the range V(A) ≤ N(R) ≤ V(S). In instances when N(R) is not valid, then the received SACK bitmap can be disregarded. In this case, V(A) can be set to N(R).

In some aspects, upon receipt of a valid SACK frame, the originator 1502 can be configured to consider all I frames with the corresponding bit set to 1 in the SACK bitmap as acknowledged. In instances when timer T201 is active and associated with an acknowledged I frame, then timer T201 can be reset. The originator 1502 can be configured to determine which I frames to retransmit by analyzing its I frame transmission sequence history and the acknowledgements received. An unacknowledged I frame that was transmitted prior to an acknowledged I frame can be considered lost and shall be marked for retransmission. Acknowledged I frames can be removed from the I frame transmission sequence history.

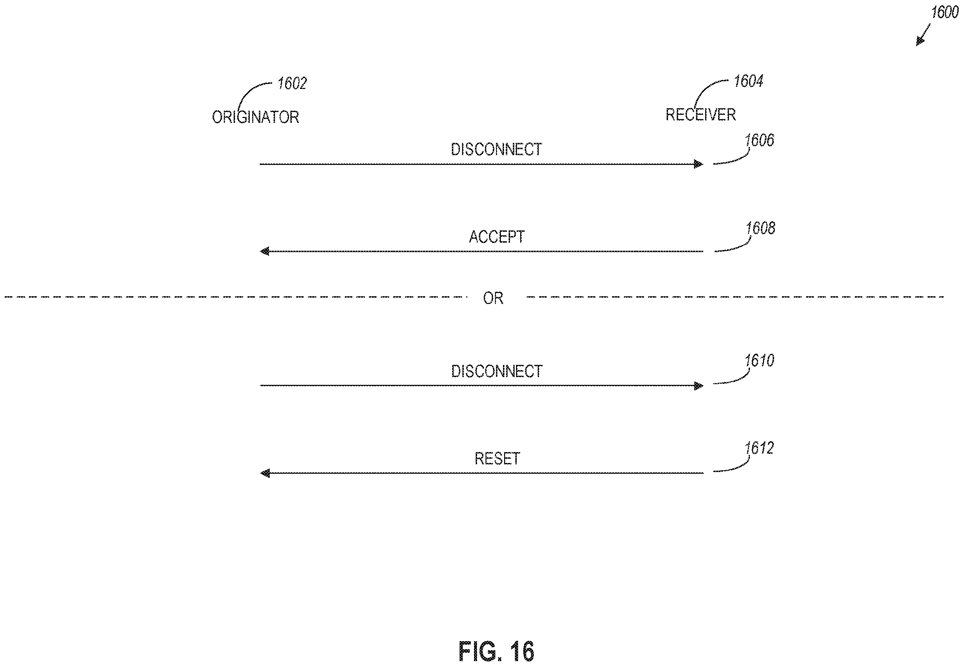

FIG. 16 illustrates an example termination of acknowledged information transfer procedure 1600 between an originator 1602 and a receiver 1604, in accordance with some aspects. The purpose of the termination of acknowledged transfer procedure can be to terminate the acknowledged transmission of information between the UE side (e.g., 1602) and the SCEF side (e.g., 1604). In some aspects, frames other than U and UI frames received during the termination of acknowledged transfer procedure can be ignored and queued I frames can be discarded.

The originator or receiver can be configured to initiate the termination of acknowledged transfer procedure when upper layers indicate termination of acknowledged operation.

The originator 1602 can be configured to initiate the termination of acknowledged transfer procedure (e.g., at operation 1606) by transmitting a DISCONNECT command. The originator can insert the Source Port in the Address field to the port number of the source application on the originator and the Destination Port in the Address field to the port number of the destination application on the receiver. The originator can be configured to reset the retransmission counter and timer T200 can be set.

Upon receiving a DISCONNECT command, if the receiver 1604 checks if the Destination Port number contained in the Address field of DISCONNECT command corresponds to an application on the receiver. If the check is successful, at operation 1608, the receiver 1604 can send an ACCEPT response to the originator 1602. The receiver 1604 can be configured to set the Source Port in the Address field to the port number of the application on the receiver, and the Destination Port in the Address field to the port number of the application on the originator.

Upon receipt of the ACCEPT response and if the Destination Port number contained in the Address field corresponds to the application which initiated the termination of acknowledged transfer procedure, the originator 1602 can be configured to terminate acknowledged transfer mode. The originator 1602 can be configured to reset timer T200 if active, and the termination of acknowledged transfer procedure is successfully completed.

Upon receiving a DISCONNECT command (e.g., at operation 1610), if the Destination Port number contained in the Address field of DISCONNECT command is not supported by the receiver or corresponds to an application that is not in acknowledged transfer mode, then the receiver 1604 can be configured to send a RESET response (e.g., at operation 1612) to the originator 1602.

In some aspects, the following parameters can be applicable for Reliable Data Service (RDS) communications. An RDS version number (Version) can be an RDS layer parameter. In some aspects, the default version number is 0.

The retransmission timers (T200 and T201) are RDS layer parameters. In some aspects, upon expiry of timer T200 or T201, retransmission of a frame may be initiated according to the procedures described herein.

The maximum number of retransmissions of a frame (N200) is an RDS layer parameter. In some aspects, the default value of N200 is 3.

The maximum number of octets in an information field (N201) is an RDS layer parameter. In some aspects, the minimum value of N201 can be 140 octets, and the maximum value can be 1520 octets, although other values can also be used.

The range of sequence numbers used in transmission of I frames and UI frames can be set from 0 to (MAX SEQUENCE NUMBER-1). In some aspects, the default value of MAX SEQUENCE NUMBER is 8.

The maximum number (k) of sequentially-numbered I frames that may be outstanding (i.e., unacknowledged) at any given time is an RDS layer parameter. In some aspects, the value k can also be denoted as window size. In some aspects, the default values of k is (MAX SEQUENCE NUMBER/2 -1).

In some aspects, an originator such as a UE, can send a communication that includes an indication that reliable data service is requested for subsequent communications. For example, a UE can communicate a protocol configuration options (PCO) information element which can include a container with a field indicating that RDS is to be used for communication with the SCEF or another entity. For example, the PCO information element can be included in a PDN Connectivity Request message (sent by the UE either included in an Attach Request during the Attach procedure or later, during a UE-requested PDN connectivity procedure). When the container identifier indicates Reliable Data Service requested indicator, the container identifier contents field is empty and the length of container identifier contents indicates a length equal to zero. In instances when the container identifier contents field is not empty, it can be ignored. In some aspects, the field indicates that the UE requests Reliable Data Service usage for exchange of information.

In instances when the container identifier indicates Reliable Data Service accepted indicator, the container identifier contents field is empty and the length of container identifier contents indicates a length equal to zero. In instances when the container identifier contents field is not empty, it can be ignored. This information indicates that the network accepts UE's request of the Reliable Data Service usage.

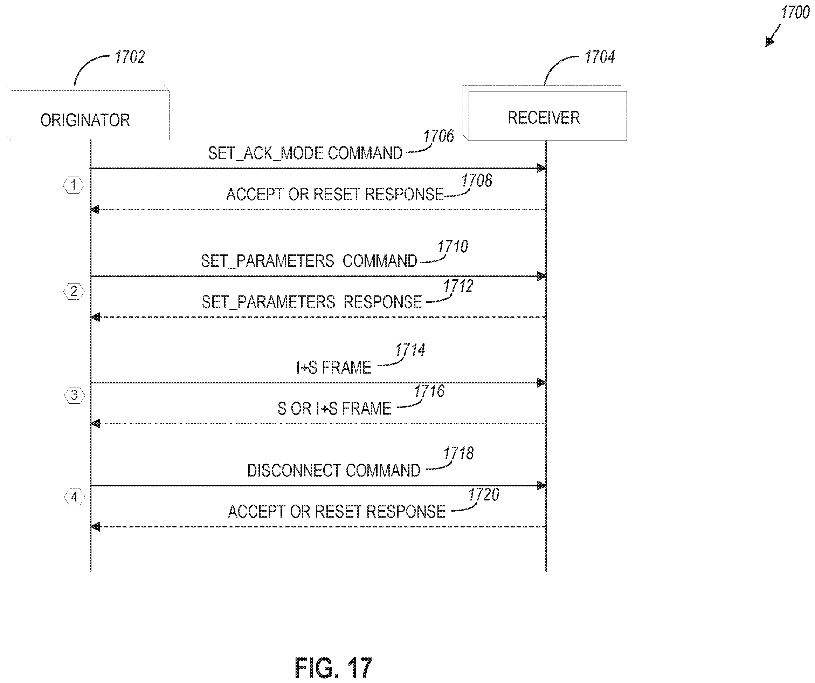

FIG. 17 illustrates example RDS protocol procedures 1700 between an originator 1702 and the receiver 1704, in accordance with some aspects. At 1706, the originator 1702 can select a port and can sends a Set_Ack_Mode command using the selected Port information. In instances when the receiver 1704 can start operation for the specified port, the receiver 1704 can communicate, at 1708, an Accept or Reset response. In instances when the originator 1702 receives a Set_Ack_Mode response, the state variables can be reset and the information transfer can begin.

In some aspects, at operation 1710, the originator 1702 can be configured to send a Set_Parameters command to negotiate one or more values of parameters. In some aspects, the originator 1702 can be configured to specify some parameters, and the receiver 1704 can be configured to set some parameters (e.g., as indicated in a Set_Parameters response sent at operation 1712).

In some aspects, at operation 1714, the originator 1702 can be configured to send information in I+S frames. The receiver 1704 can be configured to respond (e.g., at operation 1716) with S frames, e.g., Selective Acknowledgement (SACK) frames or with I+S frames

In some aspects, in instances when the originator 1702 determines to terminate the connection, the originator 1702 can be configured to send, at operation 1718, a Disconnect command. At operation 1720, the receiver 1704 can be configured to send an Accept or Reset response. As a result of the disconnect command, allocated ports can be released.

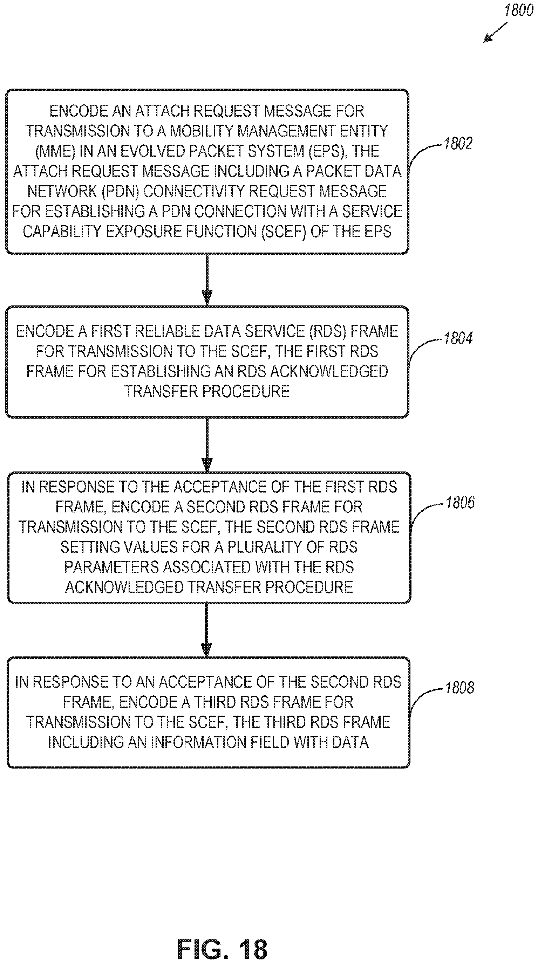

FIG. 18 illustrates generally a flowchart of an example method of operating a UE supporting RDS functionalities, in accordance with some aspects. Referring to FIG. 18, the example method 1800 can start at 1802, when an Attach Request message can be encoded for transmission to a Mobility Management Entity (MME) in an Evolved Packet System (EPS). For example and in reference to FIG. IF, the UE 102 can send the Attach Request message to MME 121. The Attach Request message can include a Packet Data Network (PDN) Connectivity Request message for establishing a PDN connection with a Service Capability Exposure Function (SCEF) (e.g., 172) of the EPS.

During operation 1804, a first Reliable Data Service (RDS) frame can be encoded for transmission to the SCEF. The first RDS frame can be a SET ACK MODE frame for establishing an RDS acknowledged transfer procedure.

During operation 1806, in response to the acceptance of the first RDS frame, a second RDS frame can be encoded for transmission to the SCEF. For example, the second RDS frame can be a Set_Parameters command frame, setting values for a plurality of RDS parameters associated with the RDS acknowledged transfer procedure. During operation 1808, in response to an acceptance of the second RDS frame, a third RDS frame can be encoded for transmission to the SCEF. For example, the third RDS frame can be an I+S frame including an information field with data.

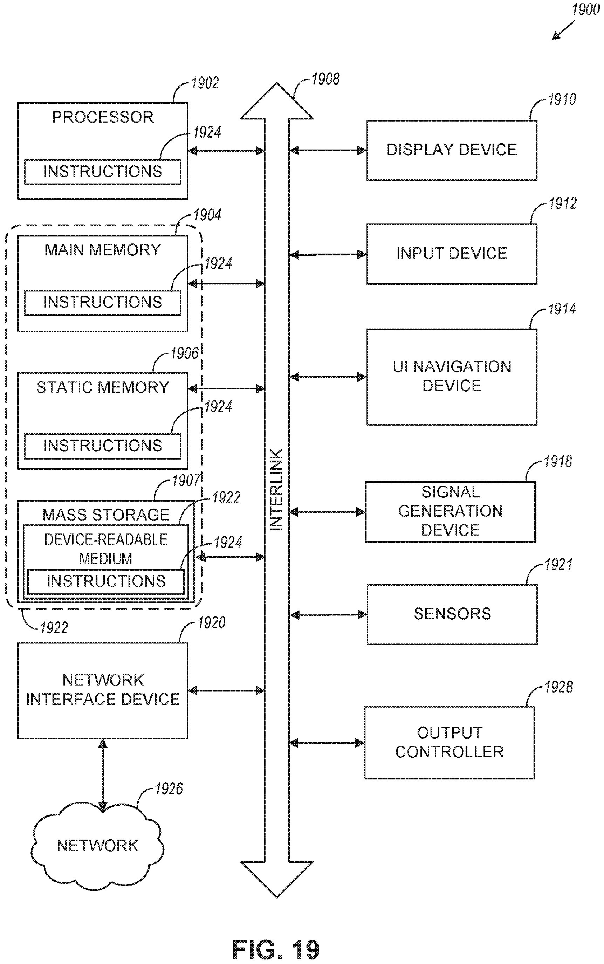

FIG. 19 illustrates a block diagram of a communication device such as an evolved Node-B (eNB), a new generation Node-B (gNB), an access point (AP), a wireless station (STA), a mobile station (MS), or a user equipment (UE), in accordance with some aspects. In alternative aspects, the communication device 1900 may operate as a standalone device or may be connected (e.g., networked) to other communication devices.

Circuitry (e.g., processing circuitry) is a collection of circuits implemented in tangible entities of the device 1900 that include hardware (e.g., simple circuits, gates, logic, etc.). Circuitry membership may be flexible over time. Circuitries include members that may, alone or in combination, perform specified operations when operating. In an example, hardware of the circuitry may be immutably designed to carry out a specific operation (e.g., hardwired). In an example, the hardware of the circuitry may include variably connected physical components (e.g., execution units, transistors, simple circuits, etc.) including a machine readable medium physically modified (e.g., magnetically, electrically, moveable placement of invariant massed particles, etc.) to encode instructions of the specific operation.

In connecting the physical components, the underlying electrical properties of a hardware constituent are changed, for example, from an insulator to a conductor or vice versa. The instructions enable embedded hardware (e.g., the execution units or a loading mechanism) to create members of the circuitry in hardware via the variable connections to carry out portions of the specific operation when in operation. Accordingly, in an example, the machine readable medium elements are part of the circuitry or are communicatively coupled to the other components of the circuitry when the device is operating. In an example, any of the physical components may be used in more than one member of more than one circuitry. For example, under operation, execution units may be used in a first circuit of a first circuitry at one point in time and reused by a second circuit in the first circuitry, or by a third circuit in a second circuitry at a different time. Additional examples of these components with respect to the device 1900 follow.

In some aspects, the device 1900 may operate as a standalone device or may be connected (e.g., networked) to other devices. In a networked deployment, the communication device 1900 may operate in the capacity of a server communication device, a client communication device, or both in server-client network environments. In an example, the communication device 1900 may act as a peer communication device in peer-to-peer (P2P) (or other distributed) network environment. The communication device 1900 may be a UE, eNB, PC, a tablet PC, a STB, a PDA, a mobile telephone, a smart phone, a web appliance, a network router, switch or bridge, or any communication device capable of executing instructions (sequential or otherwise) that specify actions to be taken by that communication device. Further, while only a single communication device is illustrated, the term "communication device" shall also be taken to include any collection of communication devices that individually or jointly execute a set (or multiple sets) of instructions to perform any one or more of the methodologies discussed herein, such as cloud computing, software as a service (SaaS), other computer cluster configurations.

Examples, as described herein, may include, or may operate on, logic or a number of components, modules, or mechanisms. Modules are tangible entities (e.g., hardware) capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client or server computer system) or one or more hardware processors may be configured by firmware or software (e.g., instructions, an application portion, or an application) as a module that operates to perform specified operations. In an example, the software may reside on a communication device-readable medium. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software, the general-purpose hardware processor may be configured as respective different modules at different times. Software may accordingly configure a hardware processor, for example, to constitute a particular module at one instance of time and to constitute a different module at a different instance of time.

Communication device (e.g., UE) 1900 may include a hardware processor 1902 (e.g., a central processing unit (CPU), a graphics processing unit (GPU), a hardware processor core, or any combination thereof), a main memory 1904, a static memory 1906, and mass storage 1916 (e.g., hard drive, tape drive, flash storage, or other block or storage devices), some or all of which may communicate with each other via an interlink (e.g., bus) 1908.

The communication device 1900 may further include a display unit 1910, an alphanumeric input device 1912 (e.g., a keyboard), and a user interface (UI) navigation device 1914 (e.g., a mouse). In an example, the display unit 1910, input device 1912 and UI navigation device 1914 may be a touch screen display. The communication device 1900 may additionally include a signal generation device 1918 (e.g., a speaker), a network interface device 1920, and one or more sensors 1921, such as a global positioning system (GPS) sensor, compass, accelerometer, or other sensor. The communication device 1900 may include an output controller 1928, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

The storage device 1916 may include a communication device-readable medium 1922, on which is stored one or more sets of data structures or instructions 1924 (e.g., software) embodying or utilized by any one or more of the techniques or functions described herein. In some aspects, registers of the processor 1902, the main memory 1904, the static memory 1906, and/or the mass storage 1916 may be, or include (completely or at least partially), the device-readable medium 1922, on which is stored the one or more sets of data structures or instructions 1924, embodying or utilized by any one or more of the techniques or functions described herein. In an example, one or any combination of the hardware processor 1902, the main memory 1904, the static memory 1906, or the mass storage 1916 may constitute the device-readable medium 1922.

As used herein, the term "device-readable medium" is interchangeable with "computer-readable medium" or "machine-readable medium". While the communication device-readable medium 1922 is illustrated as a single medium, the term "communication device-readable medium" may include a single medium or multiple media (e.g., a centralized or distributed database, and/or associated caches and servers) configured to store the one or more instructions 1924.

The term "communication device-readable medium" may include any medium that is capable of storing, encoding, or carrying instructions for execution by the communication device 1900 and that cause the communication device 1900 to perform any one or more of the techniques of the present disclosure, or that is capable of storing, encoding or carrying data structures used by or associated with such instructions. Non-limiting communication device-readable medium examples may include solid-state memories, and optical and magnetic media. Specific examples of communication device-readable media may include: nonvolatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Random Access Memory (RAM); and CD-ROM and DVD-ROM disks. In some examples, communication device-readable media may include non-transitory communication device-readable media. In some examples, communication device-readable media may include communication device-readable media that is not a transitory propagating signal.

The instructions 1924 may further be transmitted or received over a communications network 1926 using a transmission medium via the network interface device 1920 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, a Long Term Evolution (LTE) family of standards, a Universal Mobile Telecommunications System (UMTS) family of standards, peer-to-peer (P2P) networks, among others. In an example, the network interface device 1920 may include one or more physical jacks (e.g., Ethernet, coaxial, or phone jacks) or one or more antennas to connect to the communications network 1926. In an example, the network interface device 1920 may include a plurality of antennas to wirelessly communicate using at least one of single-input multiple-output (SIMO), MIMO, or multiple-input single-output (MISO) techniques. In some examples, the network interface device 1920 may wirelessly communicate using Multiple User MIMO techniques.

The term "transmission medium" shall be taken to include any intangible medium that is capable of storing, encoding or carrying instructions for execution by the communication device 1900, and includes digital or analog communications signals or other intangible medium to facilitate communication of such software. In this regard, a transmission medium in the context of this disclosure is a device-readable medium.

### Additional notes and examples:

Example 1 is an apparatus of a Cellular-Internet-of-Things (CIoT) capable user equipment (UE), the apparatus comprising: processing circuitry, the processing circuitry configured to: encode an Attach Request message for transmission to a Mobility Management Entity (MME) in an Evolved Packet System (EPS), the Attach Request message including a Packet Data Network (PDN) Connectivity Request message for establishing a PDN connection with a Service Capability Exposure Function (SCEF) of the EPS; encode a first Reliable Data Service (RDS) frame for transmission to the SCEF, the first RDS frame for establishing an RDS acknowledged transfer procedure; and in response to an acceptance of the first RDS frame, encode a second RDS frame for transmission to the SCEF, the second RDS frame including an information field with data; and memory coupled to the processing circuitry, the memory configured to store the second RDS frame.

In Example 2, the subject matter of Example 1 includes, wherein the processing circuitry is further configured to: in response to decoding an acknowledgement of reception of the data by the SCEF, the processing circuitry is further configured to encode a third RDS frame for transmission to the SCEF, the third RDS frame including a disconnect command for disconnecting the RDS acknowledged transfer with the SCEF.

In Example 3, the subject matter of Examples 1-2 includes, wherein the PDN connection comprises a peer-to-peer logical link between the UE and the SCEF, the logical link associated with a pair of port numbers and an EPS bearer identification (ID) used for communicating the first and second RDS frames, and wherein the processing circuitry is further configured to: encode the pair of port numbers within at least the first RDS frame.

In Example 4, the subject matter of Example 3 includes, wherein the processing circuitry is configured to: encode for transmission an EPS Session Management (ESM) Data Transport message, the ESM Data Transport message including a non-access stratum (NAS) ESM header with the EPS bearer ID.

In Example 5, the subject matter of Examples 3-4 includes, wherein the processing circuitry is configured to: select a first port number of the pair of port numbers, the first port number associated with a source application running on the UE; and select a second port number of the pair of port numbers, the second port number associated with a destination application running on the SCEF.

In Example 6, the subject matter of Examples 2-5 includes, wherein each of the first RDS frame, the second RDS frame and the third RDS frame comprises one or more of the following: an address field, a control field, and an information field.

In Example 7, the subject matter of Example 6 includes, wherein the address field comprises: a protocol discriminator (PD) bit indicating whether the first frame, the second frame or the third frame is an RDS frame.

In Example 8, the subject matter of Examples 6-7 includes, wherein the address field comprises: a command/response (C/R) bit indicating whether the first frame, the second frame or the third frame is a command frame or a response frame.

In Example 9, the subject matter of Examples 5-8 includes, wherein the first RDS frame comprises an address field, and wherein the address field comprises a Port bit, the Port bit indicating whether a source port and a destination port are included in the address field.

In Example 10, the subject matter of Examples 6-9 includes, wherein when the Port bit is set, the address field includes the first port number as the source port and the second port number as the destination port.

In Example 11, the subject matter of Examples 6-10 includes, wherein the control field identifies a frame format associated with the first frame, the second frame or the third frame.

In Example 12, the subject matter of Example 11 includes, wherein the frame format includes one or more of: an information transfer (I) frame format; a supervisory (S) frame format; an unconfirmed information (UI) frame format; and an unnumbered (U) frame format.

In Example 13, the subject matter of Example 12 includes, wherein the first RDS frame is a SET ACK MODE frame of the U frame format, indicating the UE is configured for an acknowledged operation.

In Example 14, the subject matter of Examples 12-13 includes, wherein the second RDS frame is a combined "I+S" frame of the I frame format containing an information fields and of the S frame format containing supervisory information.

In Example 15, the subject matter of Example 14 includes, wherein the acknowledgement of reception of the data by the SCEF includes a Selective Acknowledgement (SACK) response frame of the S frame format, received in response to the combined I+S frame.

In Example 16, the subject matter of Examples 13-15 includes, wherein the third RDS frame comprises a Disconnect command frame of the U frame format for terminating the acknowledged operation.

In Example 17, the subject matter of Examples 1-16 includes, wherein the processing circuitry is configured to: in response to the acceptance of the first RDS frame, encode a fourth RDS frame for transmission to the SCEF, the fourth RDS frame setting values for a plurality of RDS parameters associated with the RDS acknowledged transfer procedure.

In Example 18, the subject matter of Example 17 includes, wherein the plurality of RDS parameters include one or more of: an RDS version number; values of T200 and T201 retransmission timers; an N200 value indicating a maximum number of retransmissions of a frame; an N201 value indicating a maximum number of octets in an information field; a range of sequence numbers used in transmission of I frames and UI frames; and a k value indicating a maximum number of sequentially-numbered I frames that may be unacknowledged.

In Example 19, the subject matter of Examples 1-18 includes, transceiver circuitry coupled to the processing circuitry; and, one or more antennas coupled to the transceiver circuitry.

Example 20 is a non-transitory computer-readable storage medium that stores instructions for execution by one or more processors of a Cellular-Internet-of-Things (CIoT) capable user equipment (UE), the instructions to configure the one or more processors to cause the UE to: encode an Attach Request message for transmission to a Mobility Management Entity (MME) in an Evolved Packet System (EPS), the Attach Request message including a Packet Data Network (PDN) Connectivity Request message for establishing a PDN connection with a Service Capability Exposure Function (SCEF) of the EPS; encode a first Reliable Data Service (RDS) frame for transmission to the SCEF, the first RDS frame for establishing an RDS acknowledged transfer procedure; in response to the acceptance of the first RDS frame, encode a second RDS frame for transmission to the SCEF, the second RDS frame setting values for a plurality of RDS parameters associated with the RDS acknowledged transfer procedure; and in response to an acceptance of the second RDS frame, encode a third RDS frame for transmission to the SCEF, the third RDS frame including an information field with data.

In Example 21, the subject matter of Example 20 includes, wherein the instructions further configure the one or more processors to cause the UE to: in response to decoding an acknowledgement of reception of the data by the SCEF, encode a fourth RDS frame for transmission to the SCEF, the fourth RDS frame including a disconnect command for disconnecting the PDN connection with the SCEF.

In Example 22, the subject matter of Examples 20-2 1 includes, wherein the instructions further configure the one or more processors to cause the UE to: encode a Protocol Configurations Options (PCO) message for transmission to the MME, the PCO message including a request for a RDS service communication.

In Example 23, the subject matter of Examples 20-22 includes, wherein each of the first RDS frame, the second RDS frame and the third RDS frame comprises one or more of the following: an address field, a control field, and an information field.

In Example 24, the subject matter of Example 23 includes, wherein the address field comprises: a protocol discriminator (PD) bit indicating whether the first frame, the second frame or the third frame is an RDS frame.

In Example 25, the subject matter of Examples 23-24 includes, wherein the address field comprises: a command/response (C/R) bit indicating whether the first frame, the second frame or the third frame is a command frame or a response frame.

In Example 26, the subject matter of Examples 23-25 includes, wherein the control field identifies a frame format associated with the first frame, the second frame or the third frame.

In Example 27, the subject matter of Example 26 includes, wherein the frame format includes one or more of: an information transfer (I) frame format; a supervisory (S) frame format; an unconfirmed information (UI) frame format; and an unnumbered (U) frame format.

Example 28 is an apparatus of a Cellular-Internet-of-Things (CIoT) capable user equipment (UE), the apparatus comprising: means for encoding an Attach Request message for transmission to a Mobility Management Entity (MME) in an Evolved Packet System (EPS), the Attach Request message including a Packet Data Network (PDN) Connectivity Request message for establishing a PDN connection with a Service Capability Exposure Function (SCEF) of the EPS; means for encoding a first Reliable Data Service (RDS) frame for transmission to the SCEF, the first RDS frame for establishing an RDS acknowledged transfer procedure; and means for encoding a second RDS frame for transmission to the SCEF in response to an acceptance of the first RDS frame, the second RDS frame including an information field with data.

In Example 29, the subject matter of Example 28 includes, means for encoding a third RDS frame for transmission to the SCEF in response to decoding an acknowledgement of reception of the data by the SCEF, the third RDS frame including a disconnect command for disconnecting the RDS acknowledged transfer with the SCEF.

In Example 30, the subject matter of Examples 28-29 includes, wherein the PDN connection comprises a peer-to-peer logical link between the UE and the SCEF, the logical link associated with a pair of port numbers and an EPS bearer identification (ID) used for communicating the first and second RDS frames, and wherein the apparatus further comprises: means for encoding the pair of port numbers within the first RDS frame.

In Example 31, the subject matter of Example 30 includes, means for encoding for transmission an EPS Session Management (ESM) Data Transport message, the ESM Data Transport message including a non-access stratum (NAS) ESM header with the EPS bearer ID.

In Example 32, the subject matter of Examples 29-31 includes, means for selecting a first port number of the pair of port numbers, the first port number associated with a source application running on the UE; and means for selecting a second port number of the pair of port numbers, the second port number associated with a destination application running on the SCEF.

In Example 33, the subject matter of Examples 29-32 includes, wherein each of the first RDS frame, the second RDS frame and the third RDS frame comprises one or more of the following: an address field, a control field, and an information field.

In Example 34, the subject matter of Example 33 includes, wherein the address field comprises: a protocol discriminator (PD) bit indicating whether the first frame, the second frame or the third frame is an RDS frame.

In Example 35, the subject matter of Examples 33-34 includes, wherein the address field comprises: a command/response (C/R) bit indicating whether the first frame, the second frame or the third frame is a command frame or a response frame.

Example 36 is a non-transitory computer-readable storage medium that stores instructions for execution by one or more processors of a Cellular-Internet-of-Things (CIoT) Service Capability Exposure Function (SCEF), the instructions to configure the one or more processors to cause the node to: decode a Packet Data Network (PDN) Connectivity Request message for establishing a PDN connection between the SCEF and a user equipment (UE); decode a first Reliable Data Service (RDS) frame received from the UE, the first RDS frame for establishing an RDS acknowledged transfer procedure; in response to receipt of the first RDS frame, communicate an acceptance of the first RDS frame; and decode a second RDS frame from the UE, the second RDS frame including an information field with data.

In Example 37, the subject matter of Example 36 includes, wherein the instructions configure the one or more processors to cause the node to: decode a third RDS frame from the UE, the third RDS frame setting values for a plurality of RDS parameters associated with the RDS acknowledged transfer procedure.

In Example 38, the subject matter of Example 37 includes, wherein the plurality of RDS parameters include one or more of: an RDS version number; values of T200 and T201 retransmission timers; an N200 value indicating a maximum number of retransmissions of a frame; an N201 value indicating a maximum number of octets in an information field; a range of sequence numbers used in transmission of I frames and UI frames; and a k value indicating a maximum number of sequentially-numbered I frames that may be unacknowledged.

In Example 39, the subject matter of Examples 37-38 includes, wherein the instructions configure the one or more processors to cause the node to: decode a fourth RDS frame from the UE, the fourth RDS frame including a disconnect command for disconnecting the RDS acknowledged transfer with the UE.

Example 40 is at least one machine-readable medium including instructions that, when executed by processing circuitry, cause the processing circuitry to perform operations to implement of any of Examples 1-39.

Example 41 is an apparatus comprising means to implement of any of Examples 1-39.

Example 42 is a system to implement of any of Examples 39.

Example 43 is a method to implement of any of Examples 1-39.

Although an aspect has been described with reference to specific example aspects, it will be evident that various modifications and changes may be made to these aspects without departing from the scope of the claims of the present disclosure. Accordingly, the specification and drawings are to be regarded in an illustrative rather than a restrictive sense. The accompanying drawings that form a part hereof show, by way of illustration, and not of limitation, specific aspects in which the subject matter may be practiced. The aspects illustrated are described in sufficient detail to enable those skilled in the art to practice the teachings disclosed herein. Other aspects may be utilized and derived therefrom, such that structural and logical substitutions and changes may be made without departing from the scope of the claims of this disclosure. The protection scope of this patent application shall be subject to the protection scope of the claims.

Such aspects of the inventive subject matter may be referred to herein, individually and/or collectively, merely for convenience and without intending to voluntarily limit the scope of this application to any single aspect or inventive concept if more than one is in fact disclosed. Thus, although specific aspects have been illustrated and described herein, it should be appreciated that any arrangement calculated to achieve the same purpose may be substituted for the specific aspects shown.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in a single aspect for the purpose of streamlining the disclosure. This method of disclosure is not to be interpreted as reflecting an intention that the claimed aspects require more features than are expressly recited in each claim. Rather, as the following claims reflect, inventive subject matter lies in less than all features of a single disclosed aspect. Thus the following claims are hereby incorporated into the Detailed Description, with each claim standing on its own as a separate aspect.

## Claims

1. An apparatus of a Cellular-Internet-of-Things, CIoT, capable user equipment, UE (102), the apparatus comprising:
processing circuitry, the processing circuitry configured to:
encode an Attach Request message for transmission to a Mobility Management Entity MME (121), in an Evolved Packet System, EPS, the Attach Request message including a Packet Data Network, PDN, Connectivity Request message for establishing a PDN connection with a Service Capability Exposure Function, SCEF (172), of the EPS;
encode a first Reliable Data Service, RDS, frame for transmission to the SCEF (172), the first RDS frame for establishing an RDS acknowledged transfer procedure; and
in response to an acceptance of the first RD S frame, encode a second RDS frame for transmission to the SCEF (172), the second RDS frame including an information field with data; and
memory coupled to the processing circuitry, the memory configured to store the second RDS frame.

2. The apparatus of claim 1, wherein the processing circuitry is further configured to:
in response to decoding an acknowledgement of reception of the data by the SCEF (172), the processing circuitry is further configured to encode a third RDS frame for transmission to the SCEF (172), the third RDS frame including a disconnect command for disconnecting the RDS acknowledged transfer with the SCEF (172).

3. The apparatus of claim 1, wherein the PDN connection comprises a peer-to-peer logical link between the UE (102) and the SCEF (172), the logical link associated with a pair of port numbers and an EPS bearer identification, ID, used for communicating the first and second RDS frames, and wherein the processing circuitry is further configured to:
encode the pair of port numbers within at least the first RDS frame.

4. The apparatus of claim 3, wherein the processing circuitry is configured to:
encode for transmission an EPS Session Management, ESM, Data Transport message, the ESM Data Transport message including a non-access stratum, NAS, ESM header with the EPS bearer ID.

5. The apparatus of claim 3, wherein the processing circuitry is configured to:
select a first port number of the pair of port numbers, the first port number associated with a source application running on the UE; and
select a second port number of the pair of port numbers, the second port number associated with a destination application running on the SCEF (172).

6. The apparatus of claim 2, wherein each of the first RDS frame, the second RDS frame and the third RDS frame comprises one or more of the following: an address field (804), a control field (806), and an information field (808).

7. The apparatus of claim 6, wherein the address field comprises:
a protocol discriminator, PD, bit (902) indicating whether the first frame, the second frame or the third frame is an RDS frame.

8. The apparatus of claim 6, wherein the address field comprises:
a command/response, C/R, bit (904) indicating whether the first frame, the second frame or the third frame is a command frame or a response frame.

9. The apparatus of claim 5, wherein the first RDS frame comprises an address field (804), and wherein the address field comprises a Port bit (906), the Port bit (906) indicating whether a source port and a destination port are included in the address field (804).

10. The apparatus of claim 6, wherein when the Port bit (906) is set, the address field (804) includes the first port number as the source port and the second port number as the destination port.

11. The apparatus of claim 6, wherein the control field (806) identifies a frame format associated with the first frame, the second frame or the third frame.

12. A non-transitory computer-readable storage medium that stores instructions for execution by one or more processors of a Cellular-Internet-of-Things, CIoT, capable user equipment, UE,, the instructions to configure the one or more processors to cause the UE to:
encode an Attach Request message for transmission to a Mobility Management Entity, MME (121), in an Evolved Packet System, EPS,, the Attach Request message including a Packet Data Network, PDN, Connectivity Request message for establishing a PDN connection with a Service Capability Exposure Function, SCEF (172), of the EPS;
encode a first Reliable Data Service, RDS, frame for transmission to the SCEF (172), the first RDS frame for establishing an RDS acknowledged transfer procedure; and
in response to the acceptance of the first RDS frame, encode a second RDS frame for transmission to the SCEF (172), the second RDS frame including an information field with data.

13. The non-transitory computer-readable storage medium of claim 12, wherein the second RDS frame information field sets values for a plurality of RDS parameters associated with the RDS acknowledged transfer procedure and wherein the instructions further configure the one or more processors to cause the UE to:
in response to an acceptance of the second RDS frame, encode a third RDS frame for transmission to the SCEF (172), the third RDS frame including a respective information field with data; and
in response to decoding an acknowledgement of reception of the data by the SCEF (172), encode a fourth RDS frame for transmission to the SCEF (172), the fourth RDS frame including a disconnect command for disconnecting the PDN connection with the SCEF (172).

14. A non-transitory computer-readable storage medium that stores instructions for execution by one or more processors of a Cellular-Internet-of-Things, CIoT, Service Capability Exposure Function, SCEF (172)" the instructions to configure the one or more processors to cause the node to:
decode a Packet Data Network, PDN, Connectivity Request message for establishing a PDN connection between the SCEF (172) and a user equipment, UE,;
decode a first Reliable Data Service, RDS, frame received from the UE, the first RDS frame for establishing an RDS acknowledged transfer procedure;
in response to receipt of the first RDS frame, communicate an acceptance of the first RDS frame; and
decode a second RDS frame from the UE, the second RDS frame including an information field with data.

15. The non-transitory computer-readable storage medium of claim 14, wherein the instructions configure the one or more processors to cause the node to:
decode a third RDS frame from the UE, the third RDS frame setting values for a plurality of RDS parameters associated with the RDS acknowledged transfer procedure.

## Patentansprüche

1. Vorrichtung eines Cellular-Internet-of-Things, CIoT, -fähigen Benutzergeräts, UE (102), wobei die Vorrichtung umfasst:
Verarbeitungsschaltung, wobei die Verarbeitungsschaltung konfiguriert ist zum:
Codieren einer Attach-Request-Nachricht zur Übertragung an eine Mobility Management Entity, MME (121), in einem Evolved Packet System, EPS, wobei die Attach-Request-Nachricht eine Packet-Data-Network, PDN,-Connectivity-Request-Nachricht zum Herstellen einer PDN-Verbindung mit einer Service-Capability-Exposure-Function, SCEF (172), des EPS beinhaltet;
Codieren eines ersten Reliable-Data-Service, RDS,-Rahmens zur Übertragung an die SCEF (172), wobei der erste RDS-Rahmen zum Herstellen einer RDS-bestätigten Transferprozedur dient; und
als Reaktion auf eine Annahme des ersten RDS-Rahmens, Codieren eines zweiten RDS-Rahmens zur Übertragung an die SCEF (172), wobei der zweite RDS-Rahmen ein Informationsfeld mit Daten beinhaltet; und
Speicher, der mit der Verarbeitungsschaltung gekoppelt ist, wobei der Speicher zum Speichern des zweiten RDS-Rahmens konfiguriert ist.

2. Vorrichtung nach Anspruch 1, wobei die Verarbeitungsschaltung ferner konfiguriert ist zum:
als Reaktion auf Decodieren einer Bestätigung des Empfangs der Daten durch die SCEF (172), wobei die Verarbeitungsschaltung ferner konfiguriert ist zum Codieren eines dritten RDS-Rahmens zur Übertragung an die SCEF (172), wobei der dritte RDS-Rahmen einen Trennbefehl zum Trennen des RDS-bestätigten Transfers mit der SCEF (172) beinhaltet.

3. Vorrichtung nach Anspruch 1, wobei die PDN-Verbindung eine logische Peer-to-Peer-Verbindung zwischen dem UE (102) und der SCEF (172) umfasst, wobei die logische Verbindung einem Paar von Portnummern und einer EPS-Trägeridentifikation, ID, zugeordnet ist, die zum Kommunizieren des ersten und zweiten RDS-Rahmens verwendet wird, und wobei die Verarbeitungsschaltung ferner konfiguriert ist zum:
Codieren des Paars von Portnummern innerhalb mindestens des ersten RDS-Rahmens.

4. Vorrichtung nach Anspruch 3, wobei die Verarbeitungsschaltung ferner konfiguriert ist zum: Codieren zur Übertragung einer EPS-Session-Management, ESM,-Data-Transport-Nachricht, wobei die ESM-Data-Transport-Nachricht einen Non-Access-Stratum, NAS,-ESM-Header mit der EPS-Träger-ID beinhaltet.

5. Vorrichtung nach Anspruch 3, wobei die Verarbeitungsschaltung konfiguriert ist zum:
Auswählen einer ersten Portnummer des Paars von Portnummern, wobei die erste Portnummer einer Quellenanwendung zugeordnet ist, die auf dem UE läuft; und
Auswählen einer zweiten Portnummer des Paars von Portnummern, wobei die zweite Portnummer einer Zielanwendung zugeordnet ist, die auf der SCEF (172) läuft.

6. Vorrichtung nach Anspruch 2, wobei jeder des ersten RDS-Rahmens, des zweiten RDS-Rahmens und des dritten RDS-Rahmens eines oder mehrere der Folgenden umfasst: ein Adressfeld (804), ein Steuerfeld (806) und ein Informationsfeld (808).

7. Vorrichtung nach Anspruch 6, wobei das Adressfeld umfasst:
ein Protokolldiskriminator, PD, -Bit (902), das anzeigt, ob der erste Rahmen, der zweite Rahmen oder der dritte Rahmen ein RDS-Rahmen ist.

8. Vorrichtung nach Anspruch 6, wobei das Adressfeld umfasst:
ein Befehls/Antwort, C/R, -Bit (904), das anzeigt, ob der erste Rahmen, der zweite Rahmen oder der dritte Rahmen ein Befehlsrahmen oder ein Antwortrahmen ist.

9. Vorrichtung nach Anspruch 5, wobei der erste RDS-Rahmen ein Adressfeld (804) umfasst, und wobei das Adressfeld ein Port-Bit (906) umfasst, wobei das Port-Bit (906) anzeigt, ob ein Quellenport und ein Zielport im Adressfeld (804) beinhaltet sind.

10. Vorrichtung nach Anspruch 6, wobei, wenn das Port-Bit (906) gesetzt ist, das Adressfeld (804) die erste Portnummer als den Quellenport und die zweite Portnummer als den Zielport beinhaltet.

11. Vorrichtung nach Anspruch 6, wobei das Steuerfeld (806) ein Rahmenformat identifiziert, das dem ersten Rahmen, dem zweiten Rahmen oder dem dritten Rahmen zugeordnet ist.

12. Nicht-flüchtiges computerlesbares Speichermedium, das Anweisungen zur Ausführung durch einen oder mehrere Prozessoren eines Cellular-Internet-of-Things, CIoT, -fähigen Benutzergeräts, UE, speichert, wobei die Anweisungen dazu dienen, den einen oder die mehreren Prozessoren zu konfigurieren, um das UE zu veranlassen zum:
Codieren einer Attach-Request-Nachricht zur Übertragung an eine Mobility Management Entity, MME (121), in einem Evolved Packet System, EPS, wobei die Attach-Request-Nachricht eine Packet-Data-Network, PDN,-Connectivity-Request-Nachricht zum Herstellen einer PDN-Verbindung mit einer Service-Capability-Exposure-Function, SCEF (172), des EPS beinhaltet;
Codieren eines ersten Reliable-Data-Service, RDS,-Rahmens zur Übertragung an die SCEF (172), wobei der erste RDS-Rahmen zum Herstellen einer RDS-bestätigten Transferprozedur dient; und
als Reaktion auf die Annahme des ersten RDS-Rahmens, Codieren eines zweiten RDS-Rahmens zur Übertragung an die SCEF (172), wobei der zweite RDS-Rahmen ein Informationsfeld mit Daten beinhaltet.

13. Nicht-flüchtiges computerlesbares Speichermedium nach Anspruch 12, wobei das zweite RDS-Rahmen-Informationsfeld Werte für eine Vielzahl von RDS-Parametern setzt, die der RDS-bestätigten Transferprozedur zugeordnet sind, und wobei die Anweisungen ferner den einen oder die mehreren Prozessoren konfigurieren, um das UE zu veranlassen zum:
als Reaktion auf eine Annahme des zweiten RDS-Rahmens, Codieren eines dritten RDS-Rahmens zur Übertragung an die SCEF (172), wobei der dritte RDS-Rahmen ein jeweiliges Informationsfeld mit Daten beinhaltet; und
als Reaktion auf Decodieren einer Bestätigung des Empfangs der Daten durch die SCEF (172), Codieren eines vierten RDS-Rahmens zur Übertragung an die SCEF (172), wobei der vierte RDS-Rahmen einen Trennbefehl zum Trennen der PDN-Verbindung mit der SCEF (172) beinhaltet.

14. Nicht-flüchtiges computerlesbares Speichermedium, das Anweisungen zur Ausführung durch einen oder mehrere Prozessoren einer Cellular-Internet-of-Things, CIoT, -Service-Capability-Exposure-Function, SCEF (172),speichert, wobei die Anweisungen dazu dienen, den einen oder die mehreren Prozessoren zu konfigurieren, um den Knoten zu veranlassen zum:
Decodieren einer Packet-Data-Network, PDN,-Connectivity-Request-Nachricht zum Herstellen einer PDN-Verbindung zwischen der SCEF (172) und einem Benutzergerät, UE;
Decodieren eines ersten Reliable-Data-Service, RDS,-Rahmens, der vom UE empfangen wird, wobei der erste RDS-Rahmen zum Herstellen einer RDS-bestätigten Transferprozedur dient;
als Reaktion auf Empfang des ersten RDS-Rahmens, Kommunizieren einer Annahme des ersten RDS-Rahmens; und
Decodieren eines zweiten RDS-Rahmens vom UE, wobei der zweite RDS-Rahmen ein Informationsfeld mit Daten beinhaltet.

15. Nicht-flüchtiges computerlesbares Speichermedium nach Anspruch 14, wobei die Anweisungen den einen oder die mehreren Prozessoren konfigurieren, um den Knoten zu veranlassen zum:
Decodieren eines dritten RDS-Rahmens vom UE, wobei der dritte RDS-Rahmen Werte für eine Vielzahl von RDS-Parametern setzt, die der RDS-bestätigten Transferprozedur zugeordnet sind.

## Revendications

1. Un appareil d'un équipement utilisateur, UE (102), apte à l'Internet cellulaire des objets, CIoT, l'appareil comprenant :
une circuiterie de traitement, la circuiterie de traitement étant configurée pour :
coder un message de requête de rattachement pour transmission à une entité de gestion de mobilité, MME, (121), dans un système par paquets amélioré, EPS, le message de requête de rattachement contenant un message de requête de connectivité de réseau de données en paquets, PDN, pour l'établissement d'une connexion PDN avec une fonction d'exposition d'aptitude de service, SCEF (172), de l'EPS ;
coder une première trame de service de données fiable, RDS, pour transmission à la SCEF (172), la première trame RDS étant pour l'établissement d'une procédure de transfert acquittée RDS ; et
en réponse à une acceptation de la première trame RDS, coder une seconde trame RDS pour transmission à la SCEF (172), la seconde trame RDS comprenant un champ d'information avec des données ; et
une mémoire couplée à la circuiterie de traitement, la mémoire étant configurée pour stocker la seconde trame RDS.

2. L'appareil de la revendication 1, dans lequel la circuiterie de traitement est en outre configurée pour :
la circuiterie de traitement est en outre configurée pour, en réponse à un décodage d'un acquittement de réception des données par la SCEF (172), coder une troisième trame RDS pour transmission à la SCEF (172), la troisième trame RDS comprenant une commande de déconnexion pour déconnecter le transfert acquitté RDS de la SCEF (172).

3. L'appareil de la revendication 1, dans lequel la connexion PDN comprend une liaison logique pair-à-pair entre l'UE (102) et la SCEF (172), la liaison logique étant associée à un couple de numéros de port et à une identification, ID, de bearer EPS utilisés pour la communication de la première et de la seconde trame RDS, et dans lequel la circuiterie de traitement est en outre configurée pour :
coder le couple de numéros de port au moins au sein de la première trame RDS.

4. L'appareil de la revendication 3, dans lequel la circuiterie de traitement est configurée pour :
coder pour transmission un message de transport de données de gestion de session EPS, ESM, le message de transport de données ESM comprenant un entête ESM de strate de non-accès, NAS, avec l'ID de bearer EPS.

5. L'appareil de la revendication 3, dans lequel la circuiterie de traitement est configurée pour :
sélectionner un premier numéro de port du couple de numéros de port, le premier numéro de port étant associé à une application source s'exécutant sur l'UE ; et
sélectionner un second numéro de port du couple de numéros de port, le second numéro de port étant associé à une application de destination s'exécutant sur la SCEF (172) .

6. L'appareil de la revendication 2, dans lequel chacune d'entre la première trame RDS, la seconde trame RDS et la troisième trame RDS comprend un ou plusieurs des champs suivants : un champ d'adresse (804), un champ de contrôle (806), et un champ d'information (808).

7. L'appareil de la revendication 6, dans lequel le champ d'adresse comprend :
un bit discriminateur de protocole, PD, (902) indiquant si la première trame, la seconde trame ou bien la troisième trame est ou non une trame RDS.

8. L'appareil de la revendication 6, dans lequel le champ d'adresse comprend :
un bit de commande/réponse, C/R, (904) indiquant si la première trame, la seconde trame ou la troisième trame est une trame de commande ou bien une trame de réponse.

9. L'appareil de la revendication 5, dans lequel la première trame RDS comprend un champ d'adresse (804), et dans lequel le champ d'adresse comprend un bit de port (906), le bit de port (906) indiquant si un port source et un port de destination sont ou non inclus dans le champ d'adresse (804).

10. L'appareil de la revendication 6, dans lequel, lorsque le bit de port (906) est positionné, le champ d'adresse (804) inclut le premier numéro de port en tant que port source et le second numéro de port en tant que port de destination.

11. L'appareil de la revendication 6, dans lequel le champ de contrôle (806) identifie un format de trame associé à la première trame, à la seconde trame, ou à la troisième trame.

12. Un support de stockage non transitoire lisible par calculateur qui stocke des instructions destinées à être exécutées par un ou plusieurs processeurs d'un équipement utilisateur, UE, apte à l'Internet cellulaire des objets, CIoT, les instructions servant à configurer les un ou plusieurs processeurs pour faire en sorte que l'UE :
code un message de requête de rattachement pour transmission à une entité de gestion de mobilité, MME, (121), dans un système par paquets amélioré, EPS, le message de requête de rattachement contenant un message de requête de connectivité de réseau de données en paquets, PDN, pour l'établissement d'une connexion PDN avec une fonction d'exposition d'aptitude de service, SCEF (172), de l'EPS ;
code une première trame de service de données fiable, RDS, pour transmission à la SCEF (172), la première trame RDS étant pour l'établissement d'une procédure de transfert acquittée RDS ; et
en réponse à une acceptation de la première trame RDS, code une seconde trame RDS pour transmission à la SCEF (172), la seconde trame RDS comprenant un champ d'information avec des données.

13. Le support de stockage non transitoire lisible par calculateur de la revendication 12, dans lequel le champ d'information de la seconde trame RDS établit des valeurs pour une pluralité de paramètres RDS associés à la procédure de transfert acquittée RDS et dans lequel les instructions configurent en outre les un ou plusieurs processeurs pour faire en sorte que l'UE :
en réponse à une acceptation de la seconde trame RDS, code une troisième trame RDS pour transmission à la SCEF (172), la troisième trame RDS comprenant un champ d'information respectif avec des données ; et
en réponse au décodage d'un acquittement de réception des données par la SCEF (172), code une quatrième trame RDS pour transmission à la SCEF (172), la quatrième trame RDS comprenant une commande de déconnexion pour déconnecter la connexion PDN d'avec la SCEF (172).

14. Un support de stockage non transitoire lisible par calculateur qui stocke des instructions destinées à être exécutées par un ou plusieurs processeurs d'une fonction d'exposition d'aptitude de service, SCEF, (172) d'Internet cellulaire des objets, CIoT, les instructions servant à configurer les un ou plusieurs processeurs pour faire en sorte que le nœud :
décode un message de requête de connectivité de réseau de données en paquets, PDN, pour l'établissement d'une connexion PDN entre la SCEF (172) et un équipement utilisateur, UE ;
décode une première trame de service de données fiable, RDS, reçue en provenance de l'UE, la première trame RDS étant destinée à l'établissement d'une procédure de transfert acquittée RDS ;
en réponse à la réception de la première trame RDS, communique une acceptation de la première trame RDS ; et
décode une seconde trame RDS en provenance de l'UE, la seconde trame RDS incluant un champ d'information avec des données.

15. Le support de stockage non transitoire lisible par calculateur de la revendication 14, dans lequel les instructions configurent les un ou plusieurs processeurs pour faire en sorte que le nœud :
décode une troisième trame RDS en provenance de l'UE, la troisième trame RDS établissant des valeurs pour une pluralité de paramètres RDS associés à la procédure de transfert acquittée RDS.
